(19) Europäisches Patentamt
European Patent Office
Office européen des brevets

(11) **EP 3 894 753 B1**

(12) **EUROPÄISCHE PATENTSCHRIFT**

(45) Veröffentlichungstag und Bekanntmachung des Hinweises auf die Patenterteilung:
**12.02.2025 Patentblatt 2025/07**

(21) Anmeldenummer: **19817658.8**

(22) Anmeldetag: **06.12.2019**

(51) Internationale Patentklassifikation (IPC):
*F24C 7/08* (2006.01)    *H05B 6/64* (2006.01)

(52) Gemeinsame Patentklassifikation (CPC):
**F24C 7/087; H05B 6/6447; H05B 6/6455; H05B 6/705**

(86) Internationale Anmeldenummer:
**PCT/EP2019/084073**

(87) Internationale Veröffentlichungsnummer:
**WO 2020/120335 (18.06.2020 Gazette 2020/25)**

(54) **VERFAHREN ZUM BETREIBEN EINES HAUSHALTS-GARGERÄTS UND HAUSHALTS-GARGERÄT**

METHOD FOR OPERATING A DOMESTIC COOKING APPLIANCE AND DOMESTIC COOKING APPLIANCE

PROCÉDÉ POUR FAIRE FONCTIONNER UN APPAREIL DE CUISSON MÉNAGER ET APPAREIL DE CUISSON MÉNAGER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2018 DE 102018221329**

(43) Veröffentlichungstag der Anmeldung:
**20.10.2021 Patentblatt 2021/42**

(73) Patentinhaber: **BSH Hausgeräte GmbH
81739 München (DE)**

(72) Erfinder:
• **KUCHLER, Markus
  83257 Gstadt am Chiemsee (DE)**
• **RIGORTH, Kerstin
  84453 Mühldorf (DE)**
• **STERZ, Sebastian
  86845 Großaitingen (DE)**

(56) Entgegenhaltungen:
EP-A1- 1 921 384    WO-A1-2012/109634
CN-A- 107 908 144   DE-A1- 102007 048 834
US-A1- 2017 290 095

**Beschreibung**

Die Erfindung betrifft ein Verfahren zum Betreiben eines Haushalts-Gargeräts, aufweisend einen Garraum, mindestens eine Gargutbehandlungseinrichtung zum Behandeln von in dem Garraum befindlichem Gargut mit Parameterkonfigurationen, wobei durch mindestens zwei Parameterkonfigurationen das Gargut lokal unterschiedlich behandelbar ist, und mindestens einen in den Garraum gerichteten Sensor zum Bestimmen von Messwertverteilungen <V> einer Oberflächeneigenschaft des Garguts, wobei bei dem Verfahren die mindestens eine Gargutbehandlungseinrichtung für eine vorgegebene Zeitdauer mit einer der Parameterkonfigurationen betrieben wird, um in dem Garraum befindliches Gargut zu behandeln, anschließend an den Ablauf einer Zeitdauer mittels des mindestens einen Sensors eine Messwertverteilung < V > einer Oberflächeneigenschaft des Garguts bestimmt wird. Die Erfindung betrifft auch ein Haushalts-Gargerät zur Durchführung des Verfahrens. Die Erfindung ist insbesondere vorteilhaft anwendbar auf Mikrowellengeräte.

US 2018/0098381 A1 und US 2017/0290095 A1 offenbaren ein computerimplementiertes Verfahren zum Erwärmen eines Gegenstands in einem Garraum eines elektronischen Ofens hin zu einem Zielzustand. Das Verfahren umfasst das Erwärmen des Gegenstands mit einem Satz von Energieanwendungen in Bezug auf den Garraum, während sich der Ofen in einer bestimmten Konfiguration befindet. Der Satz von Energieanwendungen und die Konfiguration definieren einen jeweiligen Satz variabler Energieverteilungen in der Kammer. Das Verfahren umfasst auch das Erfassen von Sensordaten, die einen jeweiligen Satz von Antworten des Garguts auf den Satz von Energieanwendungen definieren. Das Verfahren umfasst auch das Generieren eines Plans zum Erwärmen des Gegenstands in der Kammer. Der Plan wird von einem Steuerungssystem des Ofens erzeugt und verwendet die Sensordaten.

WO 2012/109634 A1 offenbart eine Vorrichtung zur Behandlung von Objekten mit HF-Energie. Die Vorrichtung kann eine Anzeige enthalten, um einem Benutzer ein Bild eines zu bearbeitenden Objekts anzuzeigen, wobei das Bild wenigstens einen ersten Teil und einen zweiten Teil des Gegenstands umfasst. Die Vorrichtung kann auch eine Eingabeeinheit und mindestens einen Prozessor umfassen, der konfiguriert ist zum: Empfangen von Information basierend auf einer Eingabe, die an der Eingabeeinheit bereitgestellt wird, und zum Erzeugen von Verarbeitungsinformationen zur Verwendung beim Bearbeiten des Objekts basierend auf der empfangenen Information, um ein erstes Verarbeitungsergebnis in dem ersten Abschnitt des Objekts und ein zweites Verarbeitungsergebnis in dem zweiten Abschnitt des Objekts zu erzielen.

CN 107908144 A offenbart ein Verfahren zur Steuerung einer Dunstabzugshaube.

DE 10 2007 048834 A1 geht aus von einer Hausgerätevorrichtung, deren Steuereinheit eine Datenverbindung zum Empfangen von Bilddaten einer Kamera der Hausgerätevorrichtung aufweist. Die Hausgerätevorrichtung kann als Gargerät ausgebildet sei, bei dem eine klar erkennbare Bräunung und/oder Volumenänderung eines Garguts erkennbar ist.

EP 1 921 384 A1 offenbart eine Vorrichtung und ein Verfahren zum Bestimmen der Temperatur im Inneren eines Garguts. Die Vorrichtung weist wenigstens einen Temperatursensor zum Erfassen wenigstens einer Oberflächentemperatur des Garguts und/oder einer Umgebungstemperatur des Garguts, insbesondere an einem Messort innerhalb eines das Gargut umgebenden Garraumes, vorzugsweise mit einem an dem Messort angeordneten Umgebungstemperaturfühler auf. Weiterhin umfasst die Vorrichtung wenigstens einen Abstandssensor zum Erfassen eines oder einer Vielzahl von Abständen zwischen dem Abstandssensor einerseits und einem oder einer Vielzahl von Abstandsmesspunkten auf der Oberfläche des Garguts andererseits. Außerdem umfasst die Vorrichtung wenigstens eine Zeitmesseinrichtung zum Erfassen der Zeit während einer Zubereitung des Garguts und wenigstens eine Berechnungseinrichtung zum Berechnen der Temperatur im Inneren des Garguts.

Es ist die Aufgabe der vorliegenden Erfindung, die Nachteile des Standes der Technik zumindest teilweise zu überwinden und insbesondere eine besonders einfach umsetzbare und effektive Möglichkeit bereitzustellen, Gargut automatisch auf eine gewünschte Oberflächeneigenschaft hin zu behandeln.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Verfahren zum Betreiben eines Haushalts-Gargeräts, aufweisend die Merkmale des Anspruchs 1.

Dieses Verfahren ergibt den Vorteil, dass es das Gargut effektiv und in kurzer Zeit so behandeln kann, dass es eine gewünschte Oberflächeneigenschaft, insbesondere gleichmäßige Oberflächeneigenschaft, erhält.

Insbesondere ermöglicht das Verfahren eine gezielte Steuerung einer Eigenschaftsverteilung auf der Oberfläche von Gargut bei Verwendung von gargutbehandelnder Strahlung (z.B. Mikrowellenstrahlung, Wärmestrahlung usw.) unter Zuhilfenahme der Daten des

- der Qualitätswert aus einer Differenz zweier unterschiedlicher skalarer Größen, die aus der gleichen mindestens einen Messwertverteilung < V > berechnet werden, bestimmt wird,
- wobei die skalaren Größen ($x_{arithm}$, $x_{med}$) unterschiedliche Mittelwerte sind und wobei

- die mindestens eine Gargutbehandlungseinrichtung mindestens eine Mikrowelleneinrichtung zum Einbringen von Mikrowellen in den Garraum und/oder mindestens einen Strahlungsheizkörper zum Einbringen von Wärmestrahlung in den Garraum umfasst.

Dieses Verfahren ergibt den Vorteil, dass es das Gargut effektiv und in kurzer Zeit so behandeln kann, dass es eine gewünschte Oberflächeneigenschaft, insbesondere gleichmäßige Oberflächeneigenschaft, erhält.

Insbesondere ermöglicht das Verfahren eine gezielte Steuerung einer Eigenschaftsverteilung auf der Oberfläche von Gargut bei Verwendung von gargutbehandelnder Strahlung (z.B. Mikrowellenstrahlung, Wärmestrahlung usw.) unter Zuhilfenahme der Daten des mindestens einen Sensors. So kann mit geringem Aufwand eine intelligente Steuerung eines Gargeräts realisiert werden, welche dynamisch und nur auf eine aktuelle Zeitdauer oder einen aktuellen Moment bezogen ein bestmögliches Garergebnis erzielen kann. Insbesondere ist der zugehörige Rechenaufwand gering, so dass das Verfahren besonders schnell durchführbar ist. Auch wird kein Speicher zur Speicherung großer Datenmengen benötigt. Somit können auch in konventionellen Gargeräten gezielte Eigenschaftsmuster und Eigenschaftsverteilungen eingestellt werden, und zwar lediglich unter Zuhilfenahme mindestens eines einfachen Sensors.

Die Oberflächeneigenschaft kann beispielsweise eine an der Oberfläche des Garguts gemessene Temperatur, Feuchtigkeit oder Bräunungsgrad sein, ist aber nicht darauf beschränkt. Die Verteilung < V > wird im Folgenden auch als "Messwertverteilung" bezeichnet und stellt eine gemessene Ist-Verteilung des Garguts dar. Sie kann dann je nach Art der gemessenen Oberflächeneigenschaft als Temperaturverteilung, Bräunungsgradverteilung usw. bezeichnet werden. Eine gewünschte Soll-Verteilung der Oberflächeneigenschaft kann als eine Ziel-Messwertverteilung oder einfach Zielverteilung < Z > bezeichnet werden. mindestens einen Sensors. So kann mit geringem Aufwand eine intelligente Steuerung eines Gargeräts realisiert werden, welche dynamisch und nur auf eine aktuelle Zeitdauer oder einen aktuellen Moment bezogen ein bestmögliches Garergebnis erzielen kann. Insbesondere ist der zugehörige Rechenaufwand gering, so dass das Verfahren besonders schnell durchführbar ist. Auch wird kein Speicher zur Speicherung großer Datenmengen benötigt. Somit können auch in konventionellen Gargeräten gezielte Eigenschaftsmuster und Eigenschaftsverteilungen eingestellt werden, und zwar lediglich unter Zuhilfenahme mindestens eines einfachen Sensors.

Die Oberflächeneigenschaft kann beispielsweise eine an der Oberfläche des Garguts gemessene Temperatur, Feuchtigkeit oder Bräunungsgrad sein, ist aber nicht darauf beschränkt. Die Verteilung < V > wird im Folgenden auch als "Messwertverteilung" bezeichnet und stellt eine gemessene Ist-Verteilung des Garguts dar. Sie kann dann je nach Art der gemessenen Oberflächeneigenschaft als Temperaturverteilung, Bräunungsgradverteilung usw. bezeichnet werden. Eine gewünschte Soll-Verteilung der Oberflächeneigenschaft kann als eine Ziel-Messwertverteilung oder einfach Zielverteilung < Z > bezeichnet werden.

Die Parameterkonfigurationen $\{S_q\}$ ziehen allgemein einen bestimmten Werteraum auf, der durch die entsprechenden Einstell- oder Betriebsparameter gegeben ist. Eine Parameterkonfiguration $S_q$ entspricht in anderen Worten einem bestimmten q-ten Satz von Einstell- oder Betriebswerten des Haushalts-Gargeräts. Eine Parameterkonfiguration $S_q$ umfasst einen Einstellwert aus jeweils mindestens zwei möglichen Einstellwerten mindestens eines Einstell- oder Betriebsparameters des Haushalts-Gargeräts. Jeder Betriebsparameter kann also mindestens zwei Werte oder Zustände annehmen. Im einfachsten Fall können diese zwei Zustände "ein" und "aus" sein. Dadurch, dass mindestens zwei Parameterkonfigurationen das Gargut lokal unterschiedlich behandeln, ergibt sich bei entsprechender Einwirkung auf das Gargut durch die beiden Parameterkonfigurationen eine unterschiedliche Verteilung der Oberflächeneigenschaft.

Die unterschiedlichen Mittelwerte können aus genau einer Messwertverteilung < V > berechnet oder bestimmt werden.

Die unterschiedlichen Mittelwerte entsprechen unterschiedlichen Arten von Mittelwerten mit unterschiedlichen Berechnungsvorschriften. Dies ermöglicht eine Nutzung eines praktisch nutzbaren oder aussagekräftigen Qualitätswerts bei besonders geringer Rechenleistung. Die Mittelwerte können umfassen: ein modales Mittel oder Modus als Maß für eine Ausprägung mit höchster Häufigkeit, einen Medianwert, ein arithmetisches Mittel, ein geometrisches Mittel, ein harmonisches Mittel, ein quadratisches Mittel, ein kubisches Mittel. Auch können die Mittelwerte beispielsweise umfassen: ein gewichtetes Mittel (z.B. ein gewichtetes arithmetisches Mittel, ein gewichtetes geometrisches Mittel, ein gewichtetes harmonisches Mittel), einen logarithmischen Mittelwert, ein winsorisiertes und getrimmtes Mittel, ein Quartilsmittel, eine Mitte der kürzesten Hälfte, ein Gastwirth-Cohen-Mittel, gleitende Mittelwerte, weitere verallgemeinerte Mittel wie ein Hölder-Mittel, ein Lehner-Mittel, ein Stolarsky-Mittel.

Es ist eine Ausgestaltung, dass die beiden unterschiedlichen Mittelwerte einen arithmetischen Mittelwert und einen Medianwert umfassen. Die Nutzung dieser beiden Arten von Mittelwerten ist besonders einfach berechenbar und führt zu einem Qualitätswert, der eine gewünschte Zielverteilung der Oberflächeneigenschaft des Garguts besonders gut und effektiv annähern kann. Die Nutzung des Vergleichs von arithmetischem Mittelwert und Medianwert ist besonders vorteilhaft, wenn eine gleichmäßige Zielverteilung erreicht werden soll, da dann der arithmetische Mittelwert dem Medianwert entspricht. Somit ist eine Annäherung der Messwertverteilung < V > an die Zielverteilung < Z > durch einen einfachen Vergleich zwischen arithmetischem Mittelwert und Medianwert abschätzbar: je geringer der Unterschied, desto besser die Annäherung. Für eine gleichmäßige Verteilung der Oberflächeneigenschaft sind die zugrundeliegenden

Zielwerte $Z_i$ gleich, d.h., dass $Z_i$ = const. gilt.

Der arithmetische Mittelwert $x_{arithm}$ kann aus den einer Messwertverteilung < V > zugrundeliegenden k Messwerten $V_i$ mit i = 1, ..., k beispielweise gemäß

$$x_{arithm} = \frac{1}{k} \sum_{i=1}^{k} V_i$$

berechnet werden. Der Medianwert $x_{med}$ kann aus der gleichen Messwertverteilung < V > für die sortierten Werte $V_i$ beispielweise gemäß

$$x_{med} = \begin{cases} V_{\left(\frac{k+1}{2}\right)} \; f\ddot{u}r \; k \; ungerade \\ \frac{1}{2}\left(V_{\left(\frac{k}{2}\right)} + V_{\left(\frac{k}{2}+1\right)}\right) f\ddot{u}r \; k \; gerade \end{cases}$$

berechnet werden.

Es ist eine Ausgestaltung, dass der Qualitätswert einen Betrag der Differenz der beiden unterschiedlichen Mittelwerte umfasst. Dies ermöglicht eine ganz besonders einfache Berechnung und führt zu einem Qualitätswert, der eine gewünschte Zielverteilung der Oberflächeneigenschaft des Garguts ganz besonders gut und effektiv annähern kann. Der Qualitätswert Q kann also insbesondere gemäß

$$Q = \left| x_{arithm} - x_{med} \right|$$

berechnet werden. Er weist insbesondere dann, wenn eine gleichmäßige Zielverteilung der Oberflächeneigenschaft gewünscht ist, die zur Umsetzung des Verfahrens vorteilhafte Eigenschaft auf, dass sie ein natürliches Maß für die Annäherung der Messwertverteilung < V > an eine konstante oder gleichmäßige Zielverteilung darstellt. Bei Erreichen einer gleichmäßigen Zielverteilung gilt Q = 0. Dies erleichtert die Nutzung des Qualitätswerts als Kriterium zur Gerätesteuerung erheblich.

Es ist eine Ausgestaltung, dass das Qualitätskriterium ein Erreichen eines vorgegebenen Schwellwerts (im Folgenden ohne Beschränkung der Allgemeinheit als "Qualitäts-Schwellwert" bezeichnet) umfasst. So wird der Vorteil erreicht, dass ein einfach umsetzbares Maß dafür bereitgestellt wird, wann von einer aktuellen Parameterkonfiguration auf eine andere Parameterkonfiguration umgestellt oder umgeschaltet werden sollte, um eine gewünschte Zielverteilung der Oberflächeneigenschaft des Garguts wahrscheinlich schneller zu erreichen. Falls der Qualitätswert als Betragsdifferenz zwischen zwei Mittelwerten, insbesondere dem arithmetischen Mittelwert und dem Medianwert, bestimmt wird, kann das Umschalten auf die andere Parameterkonfiguration beispielsweise dann vorge**nommen werden,** wenn der Qualitätswert größer als der Qualitäts-Schwellwert ist oder in einer anderen Variante mindestens so groß wie der Qualitäts-Schwellwert ist.

Es ist eine Weiterbildung, dass das Qualitätskriterium ein Erreichen eines vorgegebenen Qualitäts-Schwellwerts umfasst, wobei der Schwellwert dem unmittelbar zuvor (beispielsweise am Ende der vorherigen Zeitdauer $\Delta t$) bestimmten Qualitätswert, ggf. zuzüglich oder abzüglich eines vorgegebenen Offsetfaktors, entspricht. Dies kann auch so formuliert werden, dass das Qualitätskriterium umfasst, das der aktuell bestimmte Qualitätswert kleiner ist als ein unmittelbar zuvor (beispielsweise am Ende der vorherigen Zeitdauer $\Delta t$) bestimmter Qualitätswert, ggf. zuzüglich oder abzüglich des Offsetfaktors, ist. Die Einhaltung des Qualitätskriteriums entspricht somit insbesondere dem Fall, dass nach der Behandlung des Garguts während seiner letzten Zeitdauer $\Delta t$ eine Annäherung an die Ziel-verteilung < Z > besser war als zuvor. Diese Weiterbildung hat den Vorteil, dass auf eine Verschlechterung der Übereinstimmung der Oberflächeneigenschaft des Garguts mit einer gewünschten Zielverteilung besonders schnell und zuverlässig reagiert werden kann. Dies ist besonders einfach und effektiv umsetzbar, wenn der Qualitätswert als Betragsdifferenz zwischen zwei Mittelwerten, insbesondere dem arithmetischen Mittelwert und dem Medianwert, definiert ist oder berechnet wird. Es ist eine Weiterbildung, dass der Qualitäts-Schwellwert ein fest vorgegebener Wert ist. Er kann aber auch ein variabler Wert sein, der z.B. von mindestens einem Garparameter, mindestens einem Einstellparameter und/oder der Art des Garguts usw. abhängig ist.

Wird mit $Q_p$ beispielsweise der aktuell oder zuletzt bestimmte Qualitätswert bezeichnet und mit $Q_{p-1}$ der zeitlich davor bestimmte Qualitätswert bezeichnet, so kann das Qualitätskriterium zum Beibehalten der Parameterkonfiguration in einer Weiterbildung auch als

$$Q_p < a \cdot Q_{p-1} \ mit \ a \le 1 \ oder \ als \ Q_p \le a \cdot Q_{p-1} \ mit \ a < 1$$

beschrieben werden, wobei mit a ein Offsetfaktor bezeichnet ist und a · $Q_{p-1}$ dem Qualitäts-Schwellwert entspricht. Der Offsetfaktor kann z.B. 1, 0,995, 0,99, 0,98 usw. betragen. Der Offsetfaktor kann beliebig, aber dann fest gewählt sein oder er kann dynamisch angepasst werden. Diese Weiterbildung kann allgemein auch so beschrieben werden, dass, falls sich für den Qualitätswert $Q_p$ eine ausreichend geringere Abweichung zu der Zielver**teilung** < Z > ergibt als für den Qualitätswert $Q_{p-1}$, das Verfahren unter Beibehaltung der aktuellen Parameterkonfiguration $S_q$ weitergeführt wird.

Anstelle des Offsetfaktors kann auch ein additiver Offset verwendet werden. Durch die Verwendung des Offsetfaktors kann vorteilhafterweise verhindert werden, dass quasistatische Zustände eintreten, in denen sich lediglich ein infinitesimaler Garfortschritt einstellt.

Es ist eine Weiterbildung, dass der mindestens eine Sensor mindestens einen Infrarotsensor und/oder mindestens einen optischen (im sichtbaren Spektrum empfindlichen) Sensor umfasst. So lässt sich eine Oberflächenbeschaffenheit besonders zuverlässig bestimmen und effektiv auswerten. Der optische Sensor eignet sich besonders zur Bestimmung eines Bräunungsgrads und/oder einer Bestimmung der Feuchtigkeit auf der Oberfläche des Garguts, während der Infrarotsensor sich besonders zur Bestimmung einer Temperaturverteilung auf der Oberfläche des Garguts eignet. Der Infrarotsensor ist insbesondere in einem nahen Infrarotbereich (NIR) empfindlich.

Es ist also eine Weiterbildung, dass aus den Messwerten des mindestens einen Sensors eine ortsaufgelöste, insbesondere bildpunktartige, Messwertverteilung < V > der Oberflächenbeschaffenheit des Garguts bereitgestellt wird, insbesondere als ein zweidimensionales Bild. Dazu kann mindestens ein Sensor ein ortsauflösend messender Sensor sein. Dies ermöglicht vorteilhafterweise eine besonders schnelle Durchführung des Verfahrens.

Es ist eine Weiterbildung, dass der mindestens eine optische Sensor eine Kamera umfasst oder ist, die ein bildpunktartig zusammengesetztes Bild des Garguts aufnimmt. Die Kamera - insbesondere Digitalkamera - ist vorteilhafterweise eine Farbkamera, kann aber auch eine Schwarz-Weiß-Kamera sein. Jedem der Bildpunkte ist ein entsprechender Messwert $V_i$, z.B. eines Bräunungsgrads, zugeordnet.

Es ist eine Ausgestaltung, dass der mindestens eine Infrarotsensor mindestens eine bildpunktartig messende IR-Kamera zur eine Aufnahme mindestens eines bildpunktartigen Wärmebilds umfasst (auch als "Wärmebildkamera" bezeichnet). Jedem der Bildpunkte ist ein entsprechender Messwert $V_i$ in Form eines Temperaturmesswerts zugeordnet. Die gemessene Oberflächeneigenschaft des Garguts ist dann dessen Oberflächentemperatur. Alternativ oder zusätzlich kann mindestens ein Sensor relativ zu dem Gargut bewegt werden (z.B. durch Befestigung auf einem verfahrbaren Träger) und an unterschiedlichen Raumpositionen Messungen durchführen, welche zu einem Gesamtbild zusammengeführt werden. So wird der Vorteil erreicht, dass die Oberfläche insbesondere auch von voluminösem oder nicht flachem Gargut vollständiger erfassbar oder ausmessbar ist. Alternativ oder zusätzlich können auch mehrere aus unterschiedlichen Blickwinkeln und/oder an unterschiedlichen Positionen in den Garraum gerichtete Sensoren verwendet werden, deren Messungen z.B. zu einem Gesamtbild zusammengeführt werden können. Der mindestens eine Infrarotsensor kann dann beispielsweise als mindestens eine sog. Thermosäule oder "Thermopile" usw. ausgebildet sein. Der mindestens ein Infrarotsensor kann auch als ein IR-Spektroskop ausgebildet sein.

Zusätzlich oder alternativ kann das Gargut bewegt werden, um seine Oberflächeneigenschaft(en) zu messen. Beispielsweise kann das Gargut auf einen Drehteller gelegt werden. Zusätzlich oder alternativ kann das Gargut in dem Garraum höhenverstellbar sein, z.B. durch eine - insbesondere motorisch - höhenverstellbare Halterung für einen Gargutträger oder durch einen höhenverstellbaren Gargutträger. Die Höhenverstellung des Garguts erfolgt insbesondere automatisch durch das Haushaltsgargerät.

Es ist eine Weiterbildung, dass der mindestens eine Sensor mindestens einen in den Garraum gerichteten Sensor zum Bestimmen von bildpunktartigen Messwertverteilungen < V > auf dem Gargut umfasst und die skalaren Größen in Form der unterschiedlichen Messwerte aus den k einzelnen Bildpunkten der mindestens einen, insbesondere genau einen Messwertverteilung < V > berechnet werden. Der Wert eines jeden Bildpunkts entspricht dabei einem Messwert $V_i$. So wird der Vorteil erreicht, dass sich die Messwerte besonders einfach aus der Messwertverteilung < V > bestimmen lassen. Ein weiterer Vorteil besteht darin, dass eine Messwertverteilung < V > typischerweise aus vielen Bildpunkten und damit vielen Messwerten $V_i$ besteht und daher daraus berechnete Mittelwerte besonders robust sind.

Die Bildpunkte können in ihrer Originalauflösung zur Durchführung des Verfahrens verwendet werden, wodurch das Verfahren besonders robust durchführbar ist. Jedoch kann zur Verringerung eines Rechenaufwands die Originalauflösung auch reduziert werden.

Es ist eine mögliche Ausgestaltung davon, dass der mindestens eine Sensor mindestens einen in den Garraum gerichteten Infrarotsensor zum Bestimmen von bildpunktartigen Messwertverteilungen < V > in Form von Temperaturverteilungen auf dem Gargut umfasst und die skalaren Größen aus den einzelnen Bildpunkten $V_i$ der Temperaturverteilungen berechnet werden. Jedoch können die skalaren Größen analog auch aus Bräunungsverteilungen, Feuchtigkeitsverteilungen usw. bestimmt werden.

Es ist eine Ausgestaltung, dass das Verfahren beendet wird, falls der Qualitätswert Q ein vorgegebenes Abbruchkriterium erreicht und/oder das Gargut bzw. dessen Messwertverteilung < V > einen vorgegebenen Zielwert $V_{Ziel}$ erreicht. So kann vorteilhafterweise eine besonders zuverlässige Annäherung des fertig behandelten Garguts an einen gewünschten Endzustand erreicht werden. Das Abbruchkriterium kann insbesondere von der zuletzt aufgenommenen Messwertverteilung < V > abhängig sein.

Falls das Kriterium umfasst, dass das Gargut einen vorgegebenen Zielwert $V_{Ziel}$ erreicht, kann dieser Zielwert mit der Messwertverteilung < V > verglichen werden, braucht es aber nicht. So kann das Kriterium z.B. auch ein Erreichen einer nutzer- oder programmseitig vorgegebenen Gardauer, Kerntemperatur usw. umfassen.

Es ist eine Ausgestaltung, dass das Gargut den vorgegebenen Zielwert $V_{Ziel}$ erreicht hat, wenn max (< V >) $\geq V_{Ziel}$ oder min (< V >) $\geq V_{Ziel}$ erfüllt ist. So lassen sich verschiedene gewünschte Endzustände des Garguts besonders zuverlässig erreichen. Das Kriterium max (< V >) $\geq V_{Ziel}$ gibt beispielsweise an, dass das Verfahren beendet werden soll, wenn auch nur ein Bildpunkt den Zielwert $V_{Ziel}$ erreicht hat. So kann vorteilhafterweise ein zu starkes oder zu langes Behandeln des Garguts verhindert werden. Das Kriterium min (< $V_p$ >) $\geq V_{Ziel}$ gibt an, dass das Verfahren beendet werden soll, wenn alle Bildpunkte den Zielwert $V_{Ziel}$ erreicht haben. So kann vorteilhafterweise ein nicht durchgehendes Behandeln des Garguts verhindert werden.

Es ist eine Ausgestaltung, dass das Abbruchkriterium das Erreichen - insbesondere Erreichen oder Unterschreiten - eines Zielqualitätswerts $Q_{Ziel}$ umfasst. Unter der Voraussetzung, dass eine Messwertverteilung < V > umso besser an die Zielverteilung < Z > angenähert ist, je kleiner Q ist, kann das Abbruchkriterium z.B. erfüllt sein, wenn $Q_p \leq Q_{Ziel}$ gilt.

Es ist eine Ausgestaltung, dass die mindestens eine Gargutbehandlungseinrichtung mindestens eine Mikrowelleneinrichtung zum Einbringen von Mikrowellen in den Garraum umfasst, wobei durch mindestens zwei Parameterkonfigurationen $S_q$ der Mikrowelleneinrichtung unterschiedliche Feldverteilungen der Mikrowellen in dem Garraum erzeugbar sind.

Das Haushalts-Gargerät kann also ein Mikrowellengerät sein, wobei die Gargutbehandlungseinrichtung dann mindestens eine Mikrowelleneinrichtung zum Einbringen von Mikrowellen in den Garraum aufweist. Die Mikrowelleneinrichtung weist insbesondere mindestens einen Mikrowellengenerator (z.B., ein Magnetron, einen invertergesteuerten Mikrowellengenerator, einen festkörperbasierten Mikrowellengenerator ("Solid State Microwave Generator") usw.) auf. Als Einstell- oder Betriebsparameter des Mikrowellengenerators, die eine Feldverteilung in dem Garraum ändern, können (insbesondere bei halbleiterbasierter Erzeugung der Mikrowellenleistung) z.B. die Betriebsfrequenz, bei mehreren Mikrowellengeneratoren und/oder Einspeisungspunkten deren relative Phase usw. verwendet werden.

Die Mikrowelleneinrichtung kann ferner eine Mikrowellenführung zum Führen der von dem Mikrowellengenerator erzeugten Mikrowellen in den Garraum aufweisen. Die Mikrowellenführung kann z.B. ein Hohlleiter oder ein HF-Kabel sein oder aufweisen.

Die Mikrowelleneinrichtung kann ferner mindestens eine einstellbare feldverändernde Komponente aufweisen, d.h., dass je nach Stellung der feldverändernden Komponente eine Feldverteilung der Mikrowellen in dem Garraum unterschiedlich ist. Abhängig von der Einstellung der Einstell- oder Betriebsparameter dieser feldverändernden Komponenten wird sich eine bestimmte Feldverteilung und damit ein bestimmtes Erwärmungs- oder Veränderungsmuster im Gargut einstellen.

Die mindestens eine feldverändernde Komponente kann z.B. mindestens eine drehbare Antenne aufweisen oder sein, die Mikrowellenenergie in den Garraum auskoppelt, z.B. aus der Mikrowellenführung. Diese Drehantennen sind typischerweise nicht rotationssymmetrisch geformt, so dass für sie eine Winkelstellung als Einstell- oder Betriebsparameter angegeben werden kann, die z.B. über einen Schrittmotor gezielt einstellbar ist. Die mindestens eine drehbare Antenne kann in einer Weiterbildung auch in Bezug auf ihre Höhenposition einstellbar sein.

Die mindestens eine feldverändernde Komponente kann zusätzlich oder alternativ mindestens einen in Bezug auf seine räumliche Position einstellbaren Mikrowellenreflektor aufweisen. Der Mikrowellenreflektor kann drehbar und/oder verschiebbar sein. Ein drehbarer Mikrowellenreflektor kann als ein Modenrührer ("Wobbler") ausgebildet sein. Ein verschiebbarer Mikrowellenreflektor kann als ein räumlich verschiebbares Dielektrikum (z.B. aus Teflon) ausgebildet sein.

Für den Fall, dass die mindestens eine Gargutbehandlungseinrichtung eine Mikrowelleneinrichtung aufweist oder umfasst, kann der mindestens eine Einstell- oder Betriebsparameter mindestens einen Betriebsparameter aus der Gruppe

- jeweiliger Drehwinkel mindestens einer drehbaren Antenne;
- jeweilige Höhenposition mindestens einer drehbaren Antenne;
- räumliche Position mindestens eines Mikrowellenreflektors;
- Mikrowellenfrequenz;
- relative Phasen zwischen unterschiedlichen Mikrowellengeneratoren;

umfassen. Dies schließt nicht aus, das sich auch noch weitere Betriebsparameter der Mikrowelleneinrichtung einstellen lassen, welche die Feldverteilung ändern können.

Das Haushalts-Gargerät kann aber auch ein Backofen sein, wobei die Gargutbehandlungseinrichtung dann mindestens einen - insbesondere elektrisch betriebenen - Strahlungsheizkörper zum Einbringen von Wärmestrahlung in den Garraum aufweist, z.B. mindestens einen Unterhitzeheizkörper, mindestens einen Oberhitzeheizkörper und/oder mindestens einen Grillheizkörper.

Es ist eine Weiterbildung, dass für den Fall eines Backofens die mindestens eine Gargutbehandlungseinheit mindestens eine Gargutbehandlungseinheit aus der Gruppe aufweisend

- mindestens einen elektrischen Strahlungsheizkörper,
- mindestens eine Induktionsspule,
- mindestens ein strahlgerichtetes Kühlluftgebläse,
- **mindestens** eine strahlgerichtete Heißlufteinrichtung und/oder
- mindestens eine strahlgerichtete Wassereinspeisungseinrichtung

umfasst. So wird der Vorteil erreicht, dass sich die Oberflächeneigenschaft mit vielen Vorrichtungen (falls in dem Haushalts-Gargerät vorhanden) einzeln oder in beliebiger Kombination vereinheitlichen oder auf eine andere Ziel-Verteilung der Oberflächeneigenschaft einstellen lässt. Dies wiederum erhöht eine Effektivität des Verfahrens. Unter einer strahlgerichteten Vorrichtung kann insbesondere eine Stoffeinbringungseinheit verstanden werden, die dazu eingerichtet ist, mindestens einen lokal begrenzten, gerichteten Strom von Stoff zur lokalen Behandlung des Garguts in den Garraum einzubringen.

Der mindestens eine elektrische Strahlungsheizkörper dient zur Erwärmung des Garraums bzw. des in dem Garraum vorhandenen Garguts durch Abgabe von Wärmestrahlung. Er kann ein jeweiliger Rohrheizkörper sein, alternativ oder zusätzlich z.B. eine gedruckte Leiterbahn, ein Widerstands-Flächenheizelement usw. Ist das Haushalts-Gargerät mit mindestens einem elektrischen Strahlungsheizkörper ausgestattet, kann der Garraum auch als Ofenraum bezeichnet werden.

Der mindestens eine Strahlungsheizkörper kann beispielsweise mindestens einen Unterhitze-Heizkörper zur Erzeugung einer Unterhitze oder Unterhitzefunktion, mindestens einen Oberhitze-Heizkörper zur Erzeugung einer Oberhitze oder Oberhitzefunktion, mindestens einen Grillheizkörper zur Erzeugung einer Grillfunktion (ggf. zusammen mit dem mindestens einen Oberhitze-Heizkörper), einen Ringheizkörper zur Erzeugung einer Heißluft oder Heißluftfunktion, usw. umfassen. Der Einstell- oder Betriebsparameter eines Strahlungsheizkörpers kann insbesondere unterschiedliche elektrische Leistungen oder Leistungsstufen umfassen, z.B. < 0 W, 200 W, ..., 800 W >.

Es ist eine Ausgestaltung, dass der mindestens eine elektrische Strahlungsheizkörper mindestens zwei Strahlungsheizkörper umfasst und die Parameterkonfiguration Einstellwerte für mindestens zwei der Strahlungsheizkörper umfasst. In anderen Worten können zur Durchführung des Verfahrens unterschiedliche Leistungsverteilung, die unterschiedlichen Sätzen von Einstellparametern von mindestens zwei Strahlungsheizkörpern entsprechen, genutzt werden.

**Es ist eine** Weiterbildung, dass die Strahlungsheizkörper einzeln oder individuell betrieben werden können, und zwar insbesondere unabhängig davon, ob mehrere Strahlungsheizkörper bei Auswahl einer bestimmten Betriebsart (z.B. Grillbetriebsart) zusammen betrieben werden. Dies ergibt den Vorteil, dass besonders gut auf das Erreichen einer gewünschten Verteilung der Oberflächeneigenschaft abgestimmte Leistungsverteilungen bereitstellbar sind.

Es ist eine Weiterbildung, dass die Strahlungsheizkörper (insbesondere nur) als funktionale "Betriebsart"-Gruppen oder Heizarten aktivierbar sind, die bestimmten Betriebsarten zugeordnet sind. Dabei kann in einer Variante bei mindestens einer Betriebsart genau ein Strahlungsheizkörper aktivierbar sein bzw. dieser Betriebsart genau ein Strahlungsheizkörper zugeordnet sein. In mindestens einer anderen Betriebsart werden mindestens zwei Strahlungsheizkörper aktiviert bzw. sind dieser anderen Betriebsart mindestens zwei Strahlungsheizkörper zugeordnet. Die vorgegebenen örtlichen Leistungsverteilungen können sich dann aus den Leistungseinträgen von zu verschiedenen Betriebsarten zugehörigen Strahlungsheizkörpern ergeben.

Auch kann das Haushalts-Gargerät eine Kombination aus Backofen und Mikrowellengerät sein, z.B. ein Backofen mit zusätzlicher Mikrowellenfunktionalität oder ein Mikrowellengerät mit zusätzlicher Ofenfunktion, wobei das Kombinationsgerät dann mindestens eine Mikrowelleneinrichtung und mindestens einen Strahlungsheizkörper aufweist.

Es ist eine Ausgestaltung, dass zum Bestimmen der Messwertverteilung < V > des Garguts dessen Messwertverteilung < V > in einem mittels des mindestens einen Sensors aus dem Garraum aufgenommenen Bilds, insbesondere Wärmebilds, isoliert wird, d.h., dass nur die Messwertverteilung von Gargut für das Verfahren betrachtet wird, während die Oberflächeneigenschaft der Umgebung des Garguts (z.B. eines Gargutträgers, von Garraumwänden usw.) ignoriert oder entfernt wird. In anderen Worten werden Messwerte der Oberfläche des Garguts von Messwerten anderer Oberflächen oder Bildbereiche separiert. Um dies zu erreichen, kann ein durch den Sensor aufgenommenes Bild beispielsweise einer Bildauswertung, insbesondere Objekterkennung, unterworfen werden. Dies ermöglicht eine besonders präzise, automatische Bestimmung der Position des Garguts in dem Garraum.

**Die Oberfläche** des Garguts in dem Garraum kann alternativ oder zusätzlich durch eine Auswertung thermischer Änderungen zu Beginn des Garprozesses bestimmt werden. So wird sich die Oberfläche des Garguts in der Regel langsamer erwärmen als ein typischerweise metallischer Gargutträger, was beispielsweise in einer Wärmebildfolge erkennbar ist und auswertbar ist. Alternativ oder zusätzlich können zeitliche Änderungen in der wellenlängenabhängigen Reflektion ausgewertet werden.

Alternativ kann die Position des Garguts in dem Garraum auf andere Weise bestimmt werden, z.B. nutzerseitig. Beispielsweise kann in einer Weiterbildung ein optisches Bild des Garraums aufgenommen werden und einem Nutzer zur Ansicht bereitgestellt werden, z.B. auf einem berührungsempfindlichen Bildschirm, beispielsweise des Haushalts-Gargerät und/oder einem Nutzerendgerät wie einem Smartphone oder Tablet-PC. Der Nutzer kann nun diejenige Bildfläche bestimmen, die dem Gargut entspricht. Dies kann beispielsweise durch Entlangfahren der durch den Nutzer erkannten Kontur des Garguts mittels eines Fingers oder Stifts auf dem berührungsempfindlichen Bildschirm erfolgen. Alternativ kann das aufgenommene Bild bildlich in Teilbereiche unterteilt werden, und ein Nutzer kann diejenigen Teilbereiche auswählen, auf denen das Gargut gezeigt ist, insbesondere auf denen das Gargut überwiegend gezeigt ist, insbesondere auf denen nur das Gargut gezeigt ist. Das Haushalts-Gargerät kann folgend nur die nutzerseitig ausgewählten Teilbereiche zur Durchführung des Verfahrens nutzen.

Es ist eine Ausgestaltung, dass das Verfahren iterativ abläuft, indem

- die mindestens eine Gargutbehandlungseinrichtung in einem p-ten Iterationsschritt mit $p \geq 1$ für die vorgegebene Zeitdauer $\Delta t$ mit einer q-ten Parameterkonfiguration $S_q$ mit $q \leq p$ betrieben wird, um in dem Garraum befindliches Gargut zu behandeln,
- anschließend an den Ablauf der Zeitdauer $\Delta t$ mittels des mindestens einen Sensors eine p-te Messwertverteilung $< V_p >$ der Oberflächeneigenschaft des Garguts bestimmt wird,
- für die p-te Messwertverteilung $< V_p >$ der Qualitätswert $Q_p$ berechnet wird, und
- falls für den Qualitätswert $Q_p$ das vorgegebene Qualitätskriterium erfüllt ist, die mindestens eine Gargutbehandlungseinrichtung in einem folgenden (p+1)-ten Iterationsschritt mit der gleichen q-ten Parameterkonfiguration $S_q$ betrieben wird, und
- falls für den Qualitätswert $Q_p$ das vorgegebene Qualitätskriterium nicht erfüllt ist, eine andere Parameterkonfiguration $S_{q+1}$ eingestellt wird und die mindestens eine Gargutbehandlungseinrichtung dann in einem folgenden (p+1)-ten Iterationsschritt mit der anderen Parameterkonfiguration $S_{q+1}$ betrieben wird.

Es ist eine Ausgestaltung, dass

a) die mindestens eine Gargutbehandlungseinrichtung in einem p-ten Iterationsschritt p mit $p \geq 1$ für die vorgegebene Zeitdauer $\Delta t$ mit einer q-ten Parameterkonfiguration $S_q$ mit $q \leq p$ betrieben wird, um in dem Garraum 2 befindliches Gargut G zu behandeln,
b) anschließend an den Ablauf der Zeitdauer $\Delta t$ mittels des mindestens einen Sensors 9 eine p-te Messwertverteilung $< V_p >$ der Oberflächeneigenschaft des Garguts G bestimmt wird,
c) aus einem Vergleich der p-ten Messwertverteilung $< V_p >$ mit einer vor Schritt a aufgenommenen p-1-ten Messwertverteilung $<V_{p-1}>$ ein Veränderungsmuster $<ES_q>$ berechnet und gespeichert wird,
d für alle bisher im Laufe dieses Verfahrens gespeicherten Veränderungsmuster $\{< ES_q >\}$ ein jeweiliger Bewertungswert $B_q$ berechnet wird, der einen Unterschied zwischen einer Abweichung einer Zielverteilung $< Z >$ zu der Messwertverteilung $< V_p >$ und einer Abweichung der Zielverteilung $< Z >$ zu einem Prädiktionsmuster $< V'_p >$ darstellt, wobei das Prädiktionsmuster $< V'_p >$ eine Überlagerung der Messwertverteilung $< V_p >$ mit dem zugehörigen Veränderungsmuster $< ES_q >$ darstellt,
e) diejenige Parameterkonfiguration $S_q$ eingestellt wird, deren Bewertungswert $B_q$ mindestens ein vorgegebenes Kriterium erfüllt,
f) für die p-te Messwertverteilung $< V_p >$ der Qualitätswert $Q_p$ berechnet wird,
g) falls für den Qualitätswert $Q_p$ das vorgegebene Qualitätskriterium erfüllt ist, unter Beibehaltung der aktuellen Parameterkonfiguration $S_q$ iterativ zu Schritt a) verzweigt wird, und
h) falls für den Qualitätswert $Q_p$ das vorgegebene Qualitätskriterium nicht erfüllt ist, die andere Parameterkonfiguration $S_{q+1}$ eingestellt wird und dann iterativ zu Schritt a) verzweigt wird.

Durch die Einführung eines Prädiktionsmusters und eines Bewertungswerts wird der Vorteil erreicht, dass die gewünschte Zielverteilung ganz besonders effektiv annäherbar ist.

Schritt g) wird insbesondere für den Fall ausgeführt, dass die p-te Messwertverteilung $< V_p >$ besser an die Zielverteilung $< Z >$ angepasst ist als die vorherige, (p-1)-te Messwertverteilung $< V_{p-1} >$, also eine Verbesserung der Ist-Verteilung $< V >$ auf das Erreichen der Zielverteilung $< Z >$ hin bewirkt hat. Schritt h) wird dann insbesondere für den Fall ausgeführt, dass die p-te Messwertverteilung $<V_p>$ gegenüber der vorhergegangenen Messwertverteilung $<V_{p-1}>$ keine Verbesserung ergeben hat.

Dieses Verfahren kann also umfassen, dass die Messwertverteilung $<V_p>$ ggf. sogar schlechter (oder zumindest nicht ausreichend besser) an die Zielverteilung $<Z>$ angepasst ist als die vorherige Messwertverteilung $<V_{p-1}>$, obwohl für die zugrundeliegende Parameterkonfigurationen $S_q$ gemäß ihrem Bewertungswert $B_q$ das wahrscheinlich beste Ergebnis aller bisher eingestellten Parameterkonfigurationen $S_q$ zu erwarten war. Folglich kann nun eine neue Parameterkonfigurationen $S_{q+1}$ ausgewählt und eingestellt werden, die zuvor noch nicht verwendet worden ist. Der Vorrat an Parameterkonfigurationen $\{S_q\}$ zur Durchführung des Verfahrens wird also sukzessive und bedarfsorientiert erweitert. Ob die neue Parameterkonfigurationen $S_{q+1}$ tatsächlich eine bessere Messwertverteilung $<V_{p+1}>$ ergibt als zuvor die Messwertverteilung $<V_p>$, ist aber nicht bekannt.

Es ist eine Weiterbildung, dass die andere Parameterkonfiguration $S_{q+1}$ gezielt vorgegeben wird oder zufällig oder pseudozufällig ausgewählt wird.

Insbesondere kann für homogene Zielverteilungen $<Z>$ = const. bzw. $Z_i$ = const. $\forall i$ gelten.

Das Veränderungsmuster $<E(S_q)>$ ist eine Funktion der im p-ten Iterationsschritt aufgenommenen Messwertverteilung $<V_p>$ und der im vorherigen, (p-1)-ten Iterationsschritt aufgenommenen Messwertverteilung $<V_{p-1}>$, was auch als $<E>$ = $f(<V_p>, <V_{p-1}>)$ ausgedrückt werden kann, wobei die Messwertverteilungen $<V_p>$ und $<V_{p-1}>$ wiederum auf den jeweiligen Parameterkonfigurationen $S_q$ beruhen, die gleich oder unterschiedlich sein können. Der Vergleich kann insbesondere eine allgemeine Differenz sein.

Für den Fall, dass die Oberflächeneigenschaft eine Temperatur ist, bildet das Veränderungsmuster $<E(S_q)>$ den Temperaturhub ab, der sich bei einer bestimmten Parameterkonfigurationen $S_q$ ergibt und kann bestimmt werden, indem die Temperaturverteilungen zu den Iterationsschritten (p-1) und p miteinander verglichen werden.

Zudem wird für alle bisher im Laufe dieses Verfahrens gespeicherten Veränderungsmuster $\{<E(S_q)>\}$ ein jeweiliger Bewertungswert $B_q$ berechnet, der einen Unterschied zwischen einer Abweichung einer Zielverteilung $<Z>$ zu der Messwertverteilung $<V_p>$ und einer Abweichung der Zielverteilung $<Z>$ zu einem Prädiktionsmuster $<V'_p>$ darstellt, wobei das Prädiktionsmuster $<V'_p>$ eine Überlagerung der Messwertverteilung $<V_p>$ mit dem zugehörigen Veränderungsmuster $<E(S_q)>$ darstellt. Das Prädiktionsmuster $<V'_p>$ entspricht der Messwertverteilung, die entstünde, wenn das Veränderungsmuster $<E(S_q)>$ auf $<V_p>$ angewandt würde.

Der Bewertungswert $B_q$ wiederum gibt an, wie stark ein Anwenden des zugehörigen Veränderungsmusters $<E(S_q)>$ bezogen auf die aktuelle Messwertverteilung $<V_p>$ diese Messwertverteilung $<V_p>$ wahrscheinlich an die Zielverteilung $<Z>$ annähert. Dadurch wird der Vorteil erreicht, dass auf einfache Weise eine Auswirkung einer Einstellung der zur Verfügung stehenden Parameterkonfigurationen $S_q$ auf den nächsten Iterationsschritt abschätzbar ist.

Dass diejenige Parameterkonfiguration $S_q$ eingestellt wird, deren Bewertungswert $B_q$ mindestens ein vorgegebenes Kriterium erfüllt, umfasst, dass sich genau ein solcher Bewertungswert $B_q$ ergibt, nämlich derjenige Bewertungswert $B_q$, dessen Anwendung im nächsten Iterationsschritt wahrscheinlich die beste Annäherung an die Zielverteilung $<Z>$ erreicht.

Für den Fall, dass das Haushalts-Gargerät eine Mikrowellenfunktion aufweist, ist es eine Weiterbildung, dass

- die mindestens eine Gargutbehandlungseinrichtung eine Mikrowelleneinrichtung (6) zum Einbringen von Mikrowellen in den Garraum (G) umfasst, wobei durch mindestens zwei Parameterkonfigurationen $(S_q)$ der Mikrowelleneinrichtung (6) unterschiedliche Feldverteilungen der Mikrowellen in dem Garraum (2) erzeugbar sind,
- die Oberflächeneigenschaft eine Oberflächentemperatur des Garguts (G) ist und
- der mindestens eine Sensor (9) mindestens einen in den Garraum (2) gerichteten Infrarotsensor (9) zum Bestimmen von Temperaturverteilungen $<V>$ auf dem Gargut (G) umfasst,

wobei bei dem Verfahren

a) die Mikrowelleneinrichtung (6) in einem p-ten Iterationsschritt mit $p \geq 1$ für eine vorgegebene Zeitdauer ($\Delta t$) mit einer q-ten Parameterkonfiguration $(S_q)$ mit $q \leq p$ betrieben wird, um in dem Garraum (2) befindliches Gargut (G) mit Mikrowellen zu behandeln,

b) anschließend an den Ablauf der Zeitdauer ($\Delta t$) mittels des mindestens einen Infrarotsensors (9) eine p-te Temperaturverteilung $<V_p>$ des Garguts (G) bestimmt wird,

c) aus einem Vergleich der p-ten Temperaturverteilung $<V_p>$ mit einer vor Schritt a) aufgenommenen (p-1)-ten Temperaturverteilung $<V_{p-1}>$ ein Veränderungsmuster $(E(S_q)>$ berechnet und gespeichert wird,

d) für alle bisher im Laufe dieses Verfahrens gespeicherten Veränderungsmuster $\{<E(S_q)>\}$ ein jeweiliger Bewertungswert $B_q$ berechnet wird, der einen Unterschied zwischen einer Abweichung einer Ziel-Temperaturverteilung $<Z>$ zu der Temperaturverteilung $<V_p>$ und einer Abweichung der Ziel-Temperaturverteilung $<Z>$ zu einem Prädiktionsmuster $<V'_p>$ darstellt, wobei das Prädiktionsmuster $<V'_p>$ eine Überlagerung der Temperaturverteilung

$<V_p>$ mit dem zugehörigen Veränderungsmuster $< E(S_q) >$ darstellt,
e) diejenige Parameterkonfiguration ($S_q$) eingestellt wird, deren Bewertungswert $B_q$ mindestens ein vorgegebenes Kriterium erfüllt,
f) für die p-te Temperaturverteilung $< V_p >$ der Qualitätswert ($Q_p$) berechnet wird,
g) falls für den Qualitätswert $Q_p$ das vorgegebene Qualitätskriterium erfüllt ist, unter Beibehaltung der aktuellen Parameterkonfiguration ($S_q$) iterativ zu Schritt a) verzweigt wird, und
h) falls für den Qualitätswert $Q_p$ das vorgegebene Qualitätskriterium nicht erfüllt ist, die andere Parameterkonfiguration ($S_{q+1}$) eingestellt wird und dann iterativ zu Schritt a) verzweigt wird.

Es ist eine Ausgestaltung, dass das Veränderungsmuster $(E(S_q)>$ bildpunktweise als Differenz zwischen der p-ten Messwertverteilung $<V_p>$ und der (p-1)-ten Verteilung $<V_{p-1}>$ berechnet wird, insbesondere gemäß

$$< E(S_q) > = < V_p > \, - < V_{p-1} >$$

bzw. in Bezug auf einen i-ten Bildpunkt gemäß

$$E(S_q)_i = \, V_{p,i} \, - \, V_{(p-1),i}$$

berechnet wird. Das Veränderungsmuster $< E(S_q) >$ stellt den Effekt einer Behandlung des Garguts bei Einstellung der Parameterkonfiguration $S_q$ dar. Das Veränderungsmuster $< E(S_q) >$ kann auch als Veränderungsverteilung bezeichnet werden.

Es ist eine Ausgestaltung, dass der Bewertungswert $B_q = B(S_q)$ gemäß

$$B_q = \sum \left( \left| < Z^* > \, - < V_p > \right|^d - \, \left| < Z^* > \, - < V_p^{'} > \right|^d \right)$$

bzw. für i = 1, ..., k Bildpunkte gemäß

$$B_q = \sum_{i=1}^{k} \left( \left| Z^*_i - V_{p,i} \right|^d - \left| Z^*_i - V^{'}_{p,i} \right|^d \right)$$

berechnet wird, wobei das Prädiktionsmuster $< V'_p >$ beispielsweise gemäß

$$< V_p^{'} > = < V_p > \, + < E(S_q) >$$

berechnet werden kann und der Exponentialfaktor d vorgegeben ist. $< E(S_q) >$, $< V'_p >$ und $< V_p >$ können im Folgenden Absoluttemperaturen als Komponenten aufweisen und sind dann insbesondere keine - z.B. normierten - Relativverteilungen.

$< Z^* >$ bezeichnet die Zielverteilung, die, bezogen auf die aktuelle Messwertverteilung $< V_p >$ und auf den daraus abgeleiteten arithmetischen Mittelwert $x_{arithm}$ der k Komponenten von $< V_p >$ als momentaner Zielzustand unter Betrachtung von Temperaturwerten angestrebt wird. $x_{arithm}$ ist insbesondere eine Temperaturangabe in °C. Während die Zielverteilung $< Z >$ dimensionslos ist, wird $< Z^* >$ in °C geführt. Somit kann die Zielverteilung $< Z^* >$ komponentenweise für alle $Z^*_i$ gemäß

$$Z^*_i = \, x_{arithm} * Z_i$$

definiert werden, was auch als $< Z^* > = x_{arithm} \cdot < Z >$ geschrieben werden kann. Der Exponentialfaktor d gibt an, wie stark Abweichungen von der Zielverteilung $< Z >$ berücksichtigt werden sollen. Für d > 1 bevorzugt der Bewertungswert $B_q$ Erwärmungsmuster $< E(S_q) >$, die große Unterschiede der Ist-Messwertverteilung $< V_p >$ zum der Zielverteilung $< Z >$ ausgleichen.

Ebenso kann eine normierter Qualitätswert $Q_{p,norm}$ eingeführt werden. Dieser weist insbesondere den Vorteil auf, dass er unabhängig von Absoluttemperaturen ist und stets im Wertebereich von 0 bis 1 liegt. Hierzu werden alle k Komponenten $V_i$ von $< V_p >$ auf den Maximalwert $V_{p,max} = \max\{V_{p,i}\}$ hin normiert, wodurch $< V_{p\_norm} >$ komponentenweise bestimmt wird gemäß:

$$V_{p\_norm,i} = \frac{V_{p,i}}{V_{max}}$$

Analog kann $Q_{p\_norm}$ gemäß:

$$Q_{p\_norm} = \frac{1}{V_{p,max}} \frac{1}{k} \sum_{i=1}^{k} V_{p,i}$$

definiert werden. Im Folgenden können normierte und nicht-normierte Werte wie z.B. $Q_{p\_norm}$ und $Q_p$ gleichbedeutend verwendet. Allgemein kann das Verfahren gleichbedeutend mit normierten (insbesondere einheitslosen) Werten oder Größen und mit nicht-normierten Werten oder Größen durchgeführt werden.

Abhängig vom zu behandelnden Gargut kann eine individuelle Wahl von d vorteilhaft sein. Insbesondere kann so eine Unterscheidung von schnell zu erwärmenden Gargut mit geringer Wärmekapazität (z.B. Popcorn) oder Gargut mit höherer Wärmekapazität und entsprechend trägerem Ansprechverhalten (z.B. ein größeres Bratenstück) vorgenommen werden.

**Das Prädiktionsmuster** < V'$_p$ > kann aber auch auf andere Weise berechnet werden, z.B. durch gewichtete Addition des Veränderungsmusters < E(S$_q$) > mit der Messwertverteilung < V$_p$ >.

Die Aufgabe wird auch gelöst durch ein Haushalts-Gargerät, das zum Durchführen des Verfahrens wie oben beschrieben ausgestaltet ist. Das Haushalts-Gargerät kann analog zu dem Verfahren ausgebildet sein und weist die gleichen Vorteile auf.

Es ist eine Ausgestaltung, dass mindestens eine Gargutbehandlungseinrichtung zum Behandeln von in dem Garraum befindlichem Gargut mit mehreren Parameterkonfigurationen, wobei durch mindestens zwei Parameterkonfigurationen das Gargut lokal unterschiedlich behandelbar ist, und mindestens einen in den Garraum gerichteten Sensor zum Bestimmen von Verteilungen < V > einer Oberflächeneigenschaft des Garguts, und eine Datenverarbeitungseinrichtung zum Durchführen des Verfahrens aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.

Fig.1    zeigt eine vereinfachte Skizze eines Haushalts-Gargeräts, das zum Durchführen des oben beschriebenen Verfahrens eingerichtet ist; und

Fig.2    zeigt verschiedene Ablaufschritte des oben beschriebenen Verfahrens.

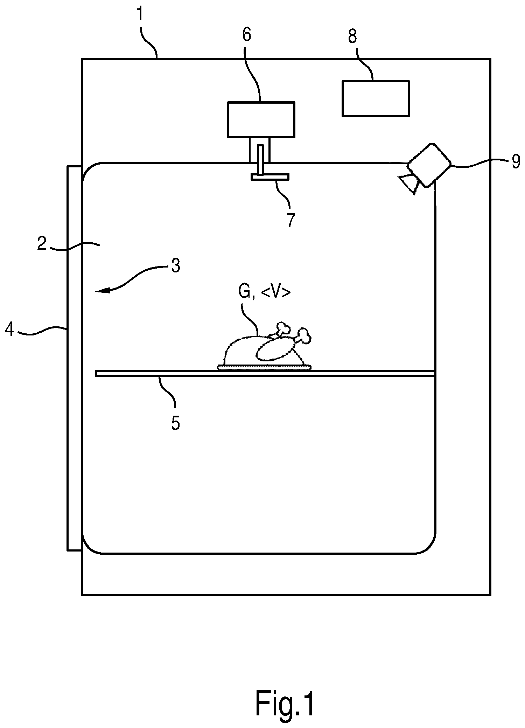

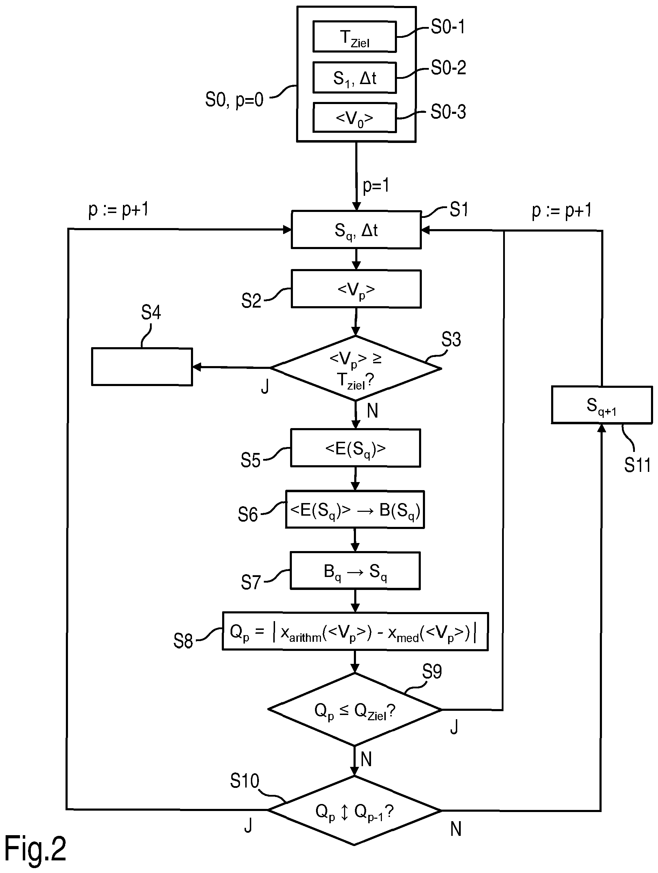

**Fig.1** zeigt als Schnittdarstellung in Seitenansicht eine Skizze eines Haushalts-Gargeräts in Form eines Mikrowellengeräts 1, das zum Ablauf des in Fig.2 näher beschriebenen Verfahrens eingerichtet ist. Das Mikrowellengerät 1 weist einen Garraum 2 mit einer vorderseitigen Beschickungsöffnung 3, die mittels einer Tür 4 verschließbar ist, auf. In dem Garraum 2 ist auf einem Gargutträger 5 Gargut G angeordnet.

Das Haushalts-Gargerät 1 weist ferner mindestens eine Gargutbehandlungseinheit in Form einer Mikrowellen-Erzeugungseinrichtung 6 auf. Die Mikrowellen-Erzeugungseinrichtung 6 kann z.B. einen invertergesteuerten Mikrowellengenerator, eine dreh- und/oder höhenverstellbare Drehantenne 7 und/oder einen dreh- und/oder höhenverstellbaren Wobbler (o. Abb.) aufweisen. Zusätzlich kann das Mikrowellengerät 1 Infrarot-Strahlungsheizkörpern aufweisen (o. Abb.), z.B. einen Unterhitze-Heizkörper, einen Oberhitze-Heizkörper und/oder einen Grillheizkörper.

Die Mikrowellen-Erzeugungseinrichtung 6 wird mittels einer Steuereinheit 8 angesteuert. Insbesondere kann die Mikrowellen-Erzeugungseinrichtung 6 auf mindestens zwei Parameterkonfigurationen S$_q$, S$_{q+1}$ mit unterschiedlichen Feldverteilungen in dem Garraum 2 eingestellt werden. Unterschiedliche Parameterkonfigurationen S$_q$, S$_{q+1}$ können z.B. unterschiedlichen Drehwinkeln der Drehantenne 7 entsprechen. Der Drehwinkel entspricht somit einem feldvariierenden Einstell- oder Betriebsparameter des Mikrowellengeräts 1 mit mindestens zwei Einstellwerten in Form von Drehwinkelwerten.

Die Steuereinheit 8 ist zudem mit einem optischen Sensor in Form einer Wärmebildkamera 9 verbunden. Die Wärmebildkamera 9 ist so angeordnet, dass sie in den Garraum 2 gerichtet ist und ein bildpunktartiges Wärmebild des Garguts G aufnehmen kann. Dadurch kann die Wärmebildkamera 9 zum Aufnehmen oder Bestimmen einer Temperaturverteilung < V > an der Oberfläche des Garguts G verwendet werden.

Die Steuereinheit 8 kann zudem dazu eingerichtet sein, das oben beschriebene Verfahren durchzuführen und kann dazu auch als Auswerteeinrichtung dienen. Alternativ kann die Auswertung auf einer geräteexternen Instanz wie einem Netzwerkrechner oder der sog. "Cloud" ablaufen (o. Abb.).

Fig.2 zeigt verschiedene Ablaufschritte des oben beschriebenen Verfahrens, die z.B. in dem in Fig.1 beschriebenen Mikrowellengerät 1 ablaufen können. Dieses Verfahren ist als ein Iterationsverfahren ausgebildet, wobei die Zahl der Iterationen durch den Schritt- oder Iterationsindex p angegeben wird.

Nach Einbringen des Garguts G in den Garraum 2 wird das Verfahren gestartet und dazu zunächst ein Initial- oder Anfangsschritt S0 durchgeführt. Diesem Anfangsschritt S0 kann ein Iterationsindex p = 0 zugeordnet sein.

In einem ersten Teilschritt S0-1 des Anfangsschritt S0 wird eine Zieltemperatur $T_{Ziel}$ für das Gargut G eingestellt.

Folgend wird in einem Teilschritt S0-2 eine erste Parameterkonfiguration $S_q = S_1$ für die Drehantenne 7 eingestellt und dann das Gargut G für eine vorgegebene Zeitdauer $\Delta t$ (z.B. zwischen 2 s und 15 s) mittels von der Mikrowellen-Erzeugungseinrichtung 6 abgegebenen Mikrowellen behandelt. Die Zahl der bisher im Rahmen des Verfahrens eingestellten Parameterkonfigurationen $S_q$ wird mit dem Index q bezeichnet. Anfänglich gilt also q = 1. Die erste Parameterkonfiguration $S_1$ kann vorgegeben sein oder zufällig oder pseudozufällig gewählt werden.

Nach Ablauf der Zeitdauer $\Delta t$ wird in einem dritten Teilschritt S0-3 mittels der Wärmekamera eine anfängliche Temperaturverteilung $< V_{p=0} >$ des Garguts G bestimmt.

Die Temperaturverteilung $< V_p >$ des Garguts G ist eine segmentweise Temperaturverteilung dahingehend, dass sie verschiedene Teilbereiche mit jeweiligen einheitlichen Temperaturwerten aufweist. Beispielsweise kann das von der Wärmebildkamera aufgenommene Bild in Bildsegmente einer bestimmten Kantenlänge oder bestimmten Zahl von Bildpunkten unterteilt werden. Der durch ein Segment dargestellte Wert ist ein für dieses Segment konstanter Temperaturwert und kann z.B. durch Mittelwertbildung der in dem jeweiligen Segment enthaltenen Bildpunktwerte oder Pixelwerte bestimmt werden. In einem Extremfall entsprechen die Segmente einzelnen Bildpunkten, d.h., dass die zur Durchführung des Verfahrens verwendete Temperaturverteilung des Garguts eine bildpunktweise Temperaturverteilung ist. Im Folgenden sei beispielhaft angenommen, dass die Temperaturverteilung $< V_p >$ des Garguts G in k Segmente $V_{p;i}$ mit i = 1, ..., k unterteilt ist, d.h., dass $< V_p > = < V_{p;1}; ...; V_{p;k} >$ gilt.

In einem Verfahrensschritt S1 wird die Mikrowelleneinrichtung für die vorgegebene Zeitdauer $\Delta t$ mit einer q-ten Parameterkonfiguration $S_q$ mit $q \leq p$ betrieben, um in dem Garraum befindliches Gargut G mit Mikrowellen zu behandeln. Wird Schritt S1 das erste Mal nach dem Anfangsschritt S0 durchlaufen bzw. schließt sich Schritt S1 unmittelbar an den Anfangsschritt S0 an, gilt p = q = 1. Da die Parameterkonfiguration $S_q$ aus einer Gruppe von maximal p Parameterkonfigurationen auswählbar ist, liegt also dann, wenn Schritt S1 das erste Mal durchlaufen wird, zunächst nur die in Schritt S0-2 eingestellte Parameterkonfiguration $S_1$ vor.

In einem Schritt S2 wird nach Ablauf der Zeitdauer $\Delta t$ mittels der Wärmekamera eine p-te Temperaturverteilung $< V_p >$ des Garguts G bestimmt. Die Bestimmung der Temperaturverteilung kann ein Mitteln von den jeweiligen Segment $V_{p;i}$ zugeordneten Temperaturmesswerten von Einzelbildpunkten umfassen, falls die Segmente $V_{p;i}$ mehr als einen Bildpunkt umfassen.

In einem vereinfachten Beispiel mit k = 4 Segmenten kann die Temperaturverteilung $< V_p >$ im Iterationsschritt p folgendermaßen aussehen:

$$< V_p > = \begin{bmatrix} 45 & 48 \\ 46 & 45 \end{bmatrix}$$

wobei die einzelnen Temperaturwerte $V_{p,i}$ in Grad Celsius angegeben sind..

In einem Schritt S3 wird abgefragt, ob die in Schritt S2 gemessene Temperaturverteilung $< V_p >$ den Ziel-Temperaturwert $T_{Ziel}$ erreicht oder überschritten hat. Falls ja ("J"), wird das Verfahren in einem Schritt S4 beendet. Die Bedingung oder Abfrage in Schritt S3 kann allgemein als $< V_p > \geq T_{Ziel}$ geschrieben werden und in einem Beispiel als

$$\max \{V_{p,i}\} \geq T_{ziel}$$

ausgestaltet sein, d.h., dass das Verfahren beendet wird, wenn mindestens ein Segment $V_{p,i}$ der Temperaturverteilung $< V_p >$ die Zieltemperatur überschritten hat. Alternativ kann das Verfahren z.B. beendet werden, wenn eine bestimmte Zahl von Segmenten $V_{p,i}$, ein bestimmter Prozentsatz der Segmente $V_{p,i}$ oder alle Segmente $V_{p,i}$ den Ziel-Temperaturwert $T_{Ziel}$ erreicht oder überschritten haben. Die letztere Bedingung kann auch als $\min \{V_{p,i}\} \geq T_{Ziel}$ bezeichnet werden.

Falls bei der in Schritt S3 durchgeführten Abfrage die Bedingung nicht erfüllt ist ("N"), wird zu Schritt S5 verzweigt.

In Schritt S5 wird die zuvor gemessene p-te Temperaturverteilung $< V_p >$ mit der zuvor gemessenen Temperaturverteilung $< V_{p-1} >$ verglichen bzw. verknüpft und daraus ein für die aktuell eingestellte Parameterkonfiguration $S_q$ spezifisches Veränderungsmuster $< E(S_q) >$ berechnet, und dieses Veränderungsmuster $< E(S_q) >$ dann abgespeichert. Dies kann insbesondere so durchgeführt werden, dass die Temperaturverteilungen $< V_{p-1} >$ und $< V_p >$ segmentweise verglichen werden, also entsprechende Segmente der beiden Temperaturverteilungen $< V_{p-1} >$ und $< V_p >$ mit gleichem Index i miteinander verknüpft werden.

Speziell kann das Veränderungsmuster $< E(S_q) >$ als Differenz der beiden Temperaturverteilungen $< V_{p-1} >$ und $< V_p >$ berechnet werden, d.h., dass $< E(S_q) > = < V_p > - < V_{p-1} >$ bestimmt wird. Das Veränderungsmuster $< E(S_q) >$ ist daher ebenfalls in k Segmente $E_i (S_q)$ unterteilt. Dabei werden insbesondere Segmente $V_{p;i}$ und $V_{p-1;i}$ mit gleichem Index i voneinander abgezogen, d.h., dass für alle Segmente $E_i(S_q)$ die Verknüpfung

$$E_i\left(S_q\right) = V_p - V_{p-1}$$

berechnet wird. Das Veränderungsmuster $< E(S_q) >$ entspricht einer segmentweisen Verteilung der Temperaturdifferenzen zwischen den beiden zeitlich aufeinanderfolgenden Temperaturverteilungen $< V_{p-1} >$ und $< V_p >$ und damit inhaltlich einem durch diese eingestellte Parameterkonfiguration $S_q$ bewirkten Effekt auf das Gargut G.

Bezogen auf das obige Beispiel kann z.B. dann, wenn

$$< V_{p-1} > = \begin{bmatrix} 44 & 42 \\ 44 & 43 \end{bmatrix}$$

**gilt, ergibt** sich dann ein Veränderungsmuster $E_q \equiv < E(S_q) >$ gemäß

$$E_q = \begin{bmatrix} 45 & 48 \\ 46 & 45 \end{bmatrix} - \begin{bmatrix} 44 & 42 \\ 44 & 43 \end{bmatrix} = \begin{bmatrix} 1 & 6 \\ 2 & 2 \end{bmatrix}$$

Das Veränderungsmuster $< E(S_q) >$ kann außer als Temperaturdifferenz z.B. auch als Temperaturerhöhung pro Zeiteinheit angeben werden. Die physikalische Einheit kann in diesem Fall z.B. als °C/s angegeben werden.

In einem Schritt S6 wird für alle bisher gespeicherten Veränderungsmuster $< E(S) > = \{< E(S_q) >\}$ ein jeweiliger Bewertungswert $B(S_q)$ berechnet. Beim ersten Durchlaufen des Schritts S5 ist nur das Veränderungsmuster $< E(S_1) >$ vorhanden, so dass dann auch nur ein Bewertungswert $B(S_1)$ berechnet wird.

Der Bewertungswert $B(S_q)$ beruht hier auf einer jeweiligen Verknüpfung der Temperaturverteilung $< V_p >$ und eines Prädiktionsmusters $< V'_p >$ mit einem Zielmuster $< Z >$ für das Gargut G. Dabei entspricht das Prädiktionsmusters $< V'_p >$ einer segmentartigen Temperaturverteilung, die einer für den nächsten Iterationsschritt approximierten oder angenäherten Temperaturverteilung entspricht, falls die Parameterkonfiguration $S_q$ angewandt würde.

Das Prädiktionsmusters $< V'_p >$ kann für ein bestimmtes Veränderungsmuster $< E(S_q) >$ z.B. segmentweise gemäß

$$< V'_p > = < V_p > + < E\left(S_q\right) >$$

berechnet werden. In dem obigen Beispiel würde sich dabei

$$< V'_p > = \begin{bmatrix} 46 & 54 \\ 48 & 47 \end{bmatrix}$$

ergeben.

Der Bewertungswert $B(S_q)$ stellt eine Güte oder ein Maß für eine wahrscheinliche Abweichung des Prädiktionsmusters $< V'_p >$ zu einem Zielmuster $< Z >$ für das Gargut G dar. Der "beste" Berechnungswert $B(S_q)$ gibt an, dass dann, wenn die Mikrowelleneinrichtung auf die dazu gehörige Parameterkonfiguration $S_q$ eingestellt wird, das Zielmuster $< Z >$ voraussichtlich besser angenähert wird als mit anderen bereits eingestellten oder ausprobierten Parameterkonfigurationen $S_q$. Der Bewertungswert $B_q = B(S_q)$ kann auch als "Prädiktionsgüte" bezeichnet werden.

Speziell kann der Bewertungswert $B(S_q)$ gemäß

$$B_q = \sum \left( \left| < Z^* > - < V_p > \right|^d - \left| < Z^* > - < V'_p > \right|^d \right)$$

berechnet werden, was in segmentbezogener Darstellung der Berechnung

$$B_q = \sum_{i=1}^{k} \left( \left| Z^*_i - V_{p,i} \right|^d - \left| Z^*_i - V'_{p,i} \right|^d \right)$$

mit k der Zahl der Segmente i entspricht. In diesem Fall wird die Zielverteilung $< Z >$ umso besser angenähert, je größer der Wert von $B_q$ ist.

Der Wert des Exponenten d ist ein voreingestellter Wert, der bestimmt, wie stark Abweichungen von der Zielverteilung < Z > berücksichtigt werden. Für d > 1 folgt, dass der Bewertungswert B solche Veränderungsmuster < E(S_q) > bevorzugt, die große Unterschiede der aktuellen Temperaturverteilung < V_p > zu der Zielverteilung < Z > ausgleichen.

In dem obigen Beispiel würde sich für den Fall, dass als (normierte) Zielverteilung < Z > eine gleichmäßige Temperaturverteilung mit $T_{Ziel}$ = 80 °C gewünscht wird, d.h., dass

$$< Z > = \begin{bmatrix} 1 & 1 \\ 1 & 1 \end{bmatrix}$$

gilt, so dass bei d = 1 und einem arithmetischen Mittelwert $x_{arithm}$ (< V_p >) mit

$$x_{arithm} = \frac{(45 + 48 + 46 + 45)}{4}°C = 46\,°C$$

$$< Z^* > = \begin{bmatrix} 46 & 46 \\ 46 & 46 \end{bmatrix}°C$$

folgt und sich daraus ein Bewertungswert

$$B(S_q) =$$
$$(|1 * 46 - 45| - |1 * 46 - 46|) +$$
$$(|1 * 46 - 48| - |1 * 46 - 54|) +$$
$$(|1 * 46 - 46| - |1 * 46 - 48|) +$$
$$(|1 * 46 - 45| - |1 * 46 - 47|) =$$
$$(1 - 0) + (2 - 8) + (0 - 2) + (1 - 1) =$$
$$1 - 6 - 2 + 0 = -7$$

ergibt.

Zum Vergleich wird nun der Bewertungswert $B_j$ eines weiteren, älteren Erwärmungsmusters < E_j > mit j < q bestimmt:

$$E_j = \begin{bmatrix} 3 & 1 \\ 1 & 2 \end{bmatrix}$$

$$B(S_j) =$$
$$(|1 * 46 - 45| - |1 * 46 - 48|) +$$
$$(|1 * 46 - 48| - |1 * 46 - 49|) +$$
$$(|1 * 46 - 46| - |1 * 46 - 47|) +$$
$$(|1 * 46 - 45| - |1 * 46 - 47|) =$$
$$(1 - 2) + (2 - 3) + (0 - 1) + (1 - 1) =$$
$$= 1 - 1 - 1 + 0 = -3$$

In der Folge würde das Veränderungsmuster < Ej > ≡ < E (S_j) > ausgewählt werden, da $B(S_j) > B(S_q)$ gilt. Der Vergleich der Muster < V'_p (E_q) >, welches durch Anwenden von < E_q > ≡ < E(S_q) > entsteht und < V'_p (E_j) >, welches durch Anwenden von < E(S_j) > entsteht, zeigt, dass das Ergebnis < V'_p (E_j) > gleichmäßiger ist:

$$< V^{'}_{p}(E_q) > = \begin{bmatrix} 46 & 54 \\ 48 & 47 \end{bmatrix} < V^{'}_{p}(E_j) > = \begin{bmatrix} 48 & 49 \\ 48 & 47 \end{bmatrix}$$

In einer Variante des Verfahrens kann anstelle von

$$x_{arithm}\left(< V_p >\right) = \frac{1}{k}\sum_{i=1}^{k} V_{p,i}$$

ein Durchschnittswert $x'_{arithm}$ verwendet werden, der die zu erwartende Erwärmung bei Anwenden eines Veränderungsmusters $< E(S_q) >$ bereits mitberücksichtigt, was sich in der Form

$$x^{'}_{arithm}\left(< V_p > + < E(S_q) >\right) = \frac{1}{k}\sum_{i=1}^{k}(V_{p,i} + E_i(S_q))$$

darstellen lässt. $x_{arithm}$ und $x'_{arithm}$ können in °C angegeben werden.

In noch einer Variante kann die durchschnittliche Erwärmung eines Veränderungsmusters $< E(S_q) >$ ebenfalls mitberücksichtigt werden, insbesondere im Vergleich zur durchschnittlichen Erwärmung der Gesamtheit aller Veränderungsmuster.

Es ist eine Weiterbildung, Veränderungsmuster auszuschließen, die nicht einen gewissen Mindestschwellwert in ihrer durchschnittlichen Erwärmung aufweisen. So kann eine fehlerhafte Steuerung des Verfahrens verhindert werden, da im Grenzfall $< E(S_q) > = < 0 >$ mit

$$V_{p,i} = V^{'}_{p,i} \text{ und für } B_q = \sum_{i=1}^{k}\left(\left|Z^{*}_{i} - V_{p,i}\right|^{d} - \left|Z^{*}_{i} - V^{'}_{p,i}\right|^{d}\right) \text{ somit } B_q = 0.$$

gilt.

In einem Schritt S7 wird diejenige Parameterkonfiguration $S_q$ aus der verfügbaren Gruppe der bisher bereits zumindest einmal eingestellten Parameterkonfigurationen $\{S_q\}$ eingestellt, welche die Zielverteilung $< Z >$ voraussichtlich am besten annähert. Dies kann insbesondere diejenige Parameterkonfiguration $S_q$ sein, die dem größten Bewertungswert $B(S_q)$ entspricht.

In einem Schritt S8 wird für die p-te Temperaturverteilung $< V_p >$ ferner ein zugehöriger (p-ter) skalarer Qualitätswert $Q_p (< V_p >, < Z >)$ berechnet, der eine Abweichung der aktuell gemessenen, p-ten Temperaturverteilung $< V_p >$ von der Zielverteilung $< Z >$ bemisst bzw. ein Maß für die Ähnlichkeit der aktuell gemessenen, p-ten Temperaturverteilung $< V_p >$ mit der Zielverteilung $< Z >$ darstellt. Vorliegend sei beispielhaft eine gleichmäßige oder homogene Zielverteilung $< Z >$ mit $< Z > = $ const. ausgewählt worden, und der Qualitätswert $Q_p$ sei eine Differenz der beiden skalaren Größen arithmetischer Mittelwert $x_{arithm}$ und Medianwert $x_{med}$, insbesondere ein Betrag der Differenz. Dies ermöglicht eine ganz besonders einfache Berechnung und führt zu einem Qualitätswert, der eine gewünschte Zielverteilung der Oberflächeneigenschaft des Garguts ganz besonders gut und effektiv annähern kann. Der Qualitätswert Q kann folglich insbesondere gemäß

$$Q_p = \left|x_{arithm}\left(< V_p >\right) - x_{med}\left(< V_p >\right)\right|$$

mit

$$x_{arithm}(< V_p >) = \frac{1}{k}\sum_{i=1}^{k} V_{p,i}$$

und mit

$$x_{med}(< V_p >) = \begin{cases} V_{p,\left(\frac{k+1}{2}\right)} \; f\ddot{u}r \; k \; ungerade \\ \frac{1}{2}\left(V_{p,\left(\frac{k}{2}\right)} + V_{p,\left(\frac{k}{2}+1\right)}\right) \; f\ddot{u}r \; k \; gerade \end{cases}$$

berechnet werden. Je kleiner $Q_p$ ist, umso näher liegt im Allgemeinen $x_{arithm}$ an $x_{med}$ und damit $< V_p >$ an $< Z >$. Analog kann anstelle von $Q_p$ auch der normierte Qualitätswert $Q_{p,norm}$ verwendet werden.

In diesem Berechnungsschritt wird in einer Variante vorteilhafterweise anstelle der Temperaturverteilung $< V_p >$ die auf den maximalen Temperaturwert $V_{p,max}$ der Segmente $V_{p,i}$ normierte Temperaturverteilung $< V^*_p >$ mit ihren Segmenten $V^*_{p,i}$ = z.B. $V_{p,i}$ / $V_{p,max}$ verwendet.

In Schritt S9, welcher auch optional sein kann, wird überprüft, ob $Q_p \leq Q_{Ziel}$ gilt, d.h., ob der Qualitätswerts $Q_p$ einen vorgegebenen Zielwert $Q_{Ziel}$ erreicht hat, also ob die Zielverteilung $< Z >$ oder $< Z^* >$ ausreichend genau erreicht worden ist. Falls ja ("J"), wird zurück zu Schritt S1 verzweigt.

Hat der Qualitätswert $Q_p$ den Qualitätswert $Q_{Ziel}$ nicht erreicht ("N"), wird zu Schritt S10 verzweigt.

In Schritt S10 wird abgefragt, ob der Qualitätswert $Q_p$ besser oder schlechter ist als der für den vorhergehenden (p-1)-ten Schritt berechnete Qualitätswert $Q_{p-1}$, was durch den Ausdruck "$Q_p \updownarrow Q_{p-1}$?" symbolisiert wird. Insbesondere kann bei Nutzung der Berechnungsvorschrift

$$Q_p = \left| x_{arithm}(< V_p >) - x_{med}(< V_p >) \right|$$

mit

$$x_{arithm}(< V_p >) = \frac{1}{k} \sum_{i=1}^{k} V_{p,i}$$

und

$$x_{med}(< V_p >) = \begin{cases} V_{p,\left(\frac{k+1}{2}\right)} \; f\ddot{u}r \; k \; ungerade \\ \frac{1}{2}\left(V_{p,\left(\frac{k}{2}\right)} + V_{p,\left(\frac{k}{2}+1\right)}\right) \; f\ddot{u}r \; k \; gerade \end{cases}$$

der Ausdruck "$Q_p \updownarrow Q_{p-1}$?" durch

$$Q_p < a \cdot Q_{p-1} \, ?$$

ersetzt werden, wobei $a \cdot Q_{p-1}$ dem einem Qualitäts-Schwellwert entspricht und $a \leq 1$ gilt. So wird insbesondere erreicht, dass die Verbesserung des Qualitätswerts $Q_p$ gegenüber dem Qualitätswert $Q_{p-1}$ der vorherigen Iteration ein bestimmtes Mindestmaß erreichen oder überschreiten muss, insbesondere falls $a < 1$ gilt, z.B. bei $a = 0{,}995$. So kann vorteilhafterweise verhindert werden, dass quasistatische Zustände eintreten, in denen sich lediglich ein infinitesimaler Garfortschritt einstellt. Das Mindestmaß $a$ kann beliebig, aber dann fest gewählt sein oder es kann dynamisch angepasst werden. Falls der Qualitätswert $Q_p$ besser ist als der Qualitätswert $Q_{p-1}$ ("J"), also insbesondere die Bedingung $Q_p < a \cdot Q_{p-1}$ erfüllt ist, wird unter Beibehaltung der aktuellen Parameterkonfiguration $S_q$ zu Schritt S1 zurückverzweigt. Dabei wird der Iterationsindex p um den Wert eins gemäß p := p+1 inkrementiert. Falls die Bedingung jedoch nicht erfüllt ist ("N"), der Qualitätswert $Q_p$ also nicht besser oder sogar schlechter ist als der Qualitätswert $Q_{p-1}$, wird zu Schritt S11 verzweigt.

Falls in Schritt S10 ("N") (also insbesondere $Q_p \geq a \cdot Q_{p-1}$ gilt), wird in einem Schritt S11 eine neue Parameterkonfiguration $S_{q+1}$ eingestellt und dann zu Schritt S1 zurückverzweigt. Dabei wird der Iterationsindex p um Eins gemäß p := p+1 inkrementiert ("iterative Rückverzweigung"). Die neue Parameterkonfiguration $S_{q+1}$ ist im Rahmen des Verfahrens bisher noch nicht eingestellt worden. Sie kann vorgegeben sein oder zufällig oder pseudozufällig gewählt werden. Dadurch erhöht sich die Zahl der Gruppenmitglieder der Gruppe $\{S_q\}$ der Parameterkonfigurationen $S_q$ um eins.

Das oben beschriebene Verfahren ermöglicht eine gezielte Steuerung einer Erwärmungsverteilung von Gargut bei Verwendung von Mikrowellen- bzw. HF-Strahlung unter Zuhilfenahme von Daten einer Wärmebildkamera. So kann mit geringem Aufwand eine intelligente Steuerung eines Mikrowellengargeräts realisiert werden, welche dynamisch und nur auf den aktuellen Moment bezogen ein bestmögliches Garergebnis erzielen kann.

Somit können auch in konventionellen Mikrowellengeräten gezielte Temperaturmuster und Verteilungen eingestellt werden, was bislang als nahezu ausgeschlossen galt - und zwar lediglich unter Zuhilfenahme einer einfachen Thermokamera und eines Schrittmotors für die Drehantenne.

Selbstverständlich ist die vorliegende Erfindung nicht auf das gezeigte Ausführungsbeispiel beschränkt.

So können die obigen Verfahrensschritte auch in anderer Reihenfolgen oder ggf. auch parallel durchgeführt werden. Beispielsweise kann die Reihenfolge der Schritte S5 bis S7 und S8 bis S10 umgekehrt werden, können die Schritte S3 und S4 unmittelbar vor Schritt S8 oder nach durchgeführt werden, usw.

Die Schritte S7 und S8 können auch bereits für den Schritt p = 1 durchgeführt werden, falls ein Qualitätswert $Q_0$ vorliegt, z.B. weil er im Rahmen des Anfangsschritts S0 berechnet worden ist.

In einer weiteren, auch allgemein nutzbaren Abwandlung kann Schritt S10 direkt im Anschluss an Schritt S7 durchgeführt werden (also auf die Schritte S8 und S9 verzichtet werden). Die Qualitätsbewertung kann dann prädiktiv in der Form $Q_p = Q_p (< V_p > + < E(S_q) >, < Z >)$ durchgeführt werden, noch bevor die Parameterkonfiguration $S_q$ tatsächlich eingestellt wird.

Auch kann berücksichtigt werden, dass es aufgrund der Veränderlichkeit des Garguts und des Gesamtsystems möglich ist, dass in der Vergangenheit bestimmte Veränderungsmuster $< E(S_q) >$ nicht mehr gültig sind. Es kann dann allgemein vorteilhaft sein, wenn längere Zeit (z.B. ab einer Minute) nicht mehr verwendete Veränderungsmuster $< E(S_q) >$ dynamisch aktualisiert werden bzw. sporadisch auf ihre Gültigkeit hin überprüft werden. Dies kann z.B. durch einen Zwischenschritt geschehen, in dem das Mikrowellengerät 1 auf die zugehörige Parameterkonfiguration $S_q$ eingestellt wird und dann nach Behandeln des Garguts mit dieser Parameterkonfiguration $S_q$ das zugehörige Veränderungsmuster $< E(S_q) >$ berechnet und anstelle des alten Veränderungsmusters $< E(S_q) >$ abgespeichert wird.

Ferner kann die Schrittfolge S3, S4 mit der Schrittfolge S1, S2 getauscht werden. Es wird dann anstatt auf Schritt S1 auf Schritt S3 zurückverzweigt.

Zudem können normierte oder nicht normierte Werte und Größen verwendet werden.

Allgemein kann das Verfahren mit normierten oder nicht-normierten Werten und Verteilungen durchgeführt werden.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

Bezugszeichenliste

| | |
|---|---|
| 1 | Mikrowellengerät |
| 2 | Garraum |
| 3 | Beschickungsöffnung |
| 4 | Tür |
| 5 | Gargutträger |
| 6 | Mikrowellen-Erzeugungseinrichtung |
| 7 | Drehantenne |
| 8 | Steuereinheit |
| 9 | Wärmebildkamera |
| $B(S_q)$ | Bewertungswert |
| $< E(S_q) >$ | Veränderungsmuster |
| G | Gargut |
| p | Iterationsschritt |
| $Q_p$ | Qualitätswert der p-ten Iteration |
| $Q_{Ziel}$ | Ziel-Qualitätswert |
| $S_q$ | Parameterkonfiguration |
| S1-S11 | Verfahrensschritte |
| $T_{Ziel}$ | Zieltemperatur |
| $\Delta t$ | Zeitdauer |
| $< V >$ | Temperaturverteilung auf der Oberfläche des Garguts |
| $< V_p >$ | Temperaturverteilung in der p-ten Iteration |
| $x_{arithm}$ | Arithmetisches Mittel |
| $x_{med}$ | Medianwert |

**Patentansprüche**

1. Verfahren (S1-S11) zum Betreiben eines Haushalts-Gargeräts (1), aufweisend

   - einen Garraum (2),
   - mindestens eine Gargutbehandlungseinrichtung (6) zum Behandeln von in dem Garraum (2) befindlichem Gargut (G) mit mehreren Parameterkonfigurationen ($S_q$, $S_{q+1}$), wobei durch mindestens zwei Parameterkonfigurationen ($S_q$, $S_{q+1}$) das Gargut (G) lokal unterschiedlich behandelbar ist,
   - wobei die mindestens eine Gargutbehandlungseinrichtung (6) mindestens eine Mikrowelleneinrichtung (6) zum Einbringen von Mikrowellen in den Garraum (G) und/oder mindestens einen Strahlungsheizkörper zum Einbringen von Wärmestrahlung in den Garraum (G) umfasst und
   - mindestens einen in den Garraum (2) gerichteten Sensor (9) zum Bestimmen von Messwertverteilungen <V> einer Oberflächeneigenschaft des Garguts (G),

   wobei bei dem Verfahren

   - die mindestens eine Gargutbehandlungseinrichtung (6) für eine vorgegebene Zeitdauer ($\Delta t$) mit einer der Parameterkonfigurationen ($S_q$) betrieben wird, um in dem Garraum (2) befindliches Gargut (G) zu behandeln,
   - anschließend an den Ablauf einer Zeitdauer ($\Delta t$) mittels des mindestens einen Sensors (9) eine Messwertverteilung < V > einer Oberflächeneigenschaft des Garguts (G) bestimmt wird,
   - aus der Messwertverteilung < V > ein Qualitätswert (Q) bestimmt wird und,
   - falls der Qualitätswert (Q) ein vorgegebenes Qualitätskriterium nicht erfüllt, die Gargutbehandlungseinrichtung (6) folgend mit einer anderen der Parameterkonfigurationen ($S_{q+1}$) betrieben wird,

   **dadurch gekennzeichnet, dass**

   - der Qualitätswert (Q) aus einer Differenz zweier unterschiedlicher, aus der gleichen mindestens einen Messwertverteilung < V > berechneter skalarer Größen in Form unterschiedlicher Mittelwerte ($x_{arithm}$, $x_{med}$) bestimmt wird, wobei
   - die unterschiedlichen Mittelwerte ($x_{arithm}$, $x_{med}$) aus der Gruppe umfassend ein modales Mittel, einen Medianwert, ein arithmetisches Mittel, ein gewichtetes arithmetisches Mittel, ein geometrisches Mittel, ein gewichtetes geometrisches Mittel, ein harmonisches Mittel, ein gewichtetes harmonisches Mittel, ein quadratisches Mittel, ein kubisches Mittel, einen logarithmischen Mittelwert, ein winsorisiertes Mittel, ein Quartilsmittel, eine Mitte der kürzesten Hälfte, ein Gastwirth-Cohen-Mittel, einen gleitenden Mittelwert, ein Hölder-Mittel, ein Lehner-Mittel, ein Stolarsky-Mittel stammen.

2. Verfahren (S1-S11) nach Anspruch 1, wobei die beiden Mittelwerte ($x_{arithm}$, $x_{med}$) einen arithmetischen Mittelwert ($x_{arithm}$) und einen Medianwert ($x_{med}$) umfassen.

3. Verfahren (S1-S11) nach einem der vorhergehenden Ansprüche, bei dem der Qualitätswert einen Betrag der Differenz der beiden Mittelwerte ($x_{arithm}$, $x_{med}$) umfasst.

4. Verfahren (S1-S11) nach Anspruch 3, bei dem das Qualitätskriterium ein Erreichen oder Unterschreiten eines vorgegebenen Qualitäts-Schwellwerts umfasst.

5. Verfahren (S1-S11) nach einem der vorhergehenden Ansprüche, wobei der mindestens eine Sensor (9) mindestens einen in den Garraum (2) gerichteten Sensor (9) zum Bestimmen von bildpunktartigen Temperaturverteilungen < V > auf dem Gargut (G) umfasst und die Mittelwerte ($x_{arithm}$, $x_{med}$) aus den einzelnen Bildpunkten der Messwertverteilung <V> berechnet werden.

6. Verfahren (S1-S11) nach einem der vorhergehenden Ansprüche, bei dem das Verfahren beendet wird, falls

   - der Qualitätswerts (Q) ein vorgegebenes Abbruchkriterium erreicht und/oder
   - die Messwertverteilung < V > einen vorgegebenen Zielwert ($V_{Ziel}$) erreicht.

7. Verfahren nach Anspruch 6, bei dem das Gargut (G) den vorgegebenen Zielwert ($V_{Ziel}$) erreicht hat, wenn max $(< V_p >) \geq V_{Ziel}$ oder min $(< V_p >) \geq V_{Ziel}$ erfüllt ist.

8. Verfahren (S1-S11) nach einem der vorhergehenden Ansprüche, bei dem durch mindestens zwei Parameterkonfigurationen ($S_q$) der Mikrowelleneinrichtung (6) unterschiedliche Feldverteilungen der Mikrowellen in dem Garraum (2) erzeugbar sind.

9. Verfahren nach Anspruch 8, bei dem eine Parameterkonfiguration ($S_q$) jeweils einen Wert mindestens eines Betriebsparameters ($S_q$) der Mikrowelleneinrichtung (6) aus der Gruppe

   - jeweiliger Drehwinkel mindestens einer drehbaren Antenne (7);
   - jeweilige Höhenposition mindestens einer drehbaren Antenne (7);
   - räumliche Position mindestens eines Mikrowellenreflektors;
   - Mikrowellenfrequenz;
   - relative Phasen zwischen unterschiedlichen MW-Erzeugern;

   umfasst.

10. Verfahren nach einem der vorhergehenden Ansprüche, bei dem das Verfahren iterativ abläuft, indem

   - die mindestens eine Gargutbehandlungseinrichtung (6) in einem p-ten Iterationsschritt (p) mit $p \geq 1$ für die vorgegebene Zeitdauer ($\Delta t$) mit einer q-ten Parameterkonfiguration ($S_q$) mit $q \leq p$ betrieben wird, um in dem Garraum (2) befindliches Gargut (G) zu behandeln,
   - anschließend an den Ablauf der Zeitdauer ($\Delta t$) mittels des mindestens einen Sensors (9) eine p-te Messwertverteilung < $V_p$ > der Oberflächeneigenschaft des Garguts (G) bestimmt wird,
   - für die p-te Messwertverteilung < $V_p$ > der Qualitätswert ($Q_p$) berechnet wird, und
   - falls für den Qualitätswert ($Q_p$) das vorgegebene Qualitätskriterium erfüllt ist, die mindestens eine Gargutbehandlungseinrichtung (6) in einem folgenden (p+1)-ten Iterationsschritt mit der gleichen q-ten Parameterkonfiguration ($S_q$) betrieben wird, und
   - falls für den Qualitätswert ($Q_p$) das vorgegebene Qualitätskriterium nicht erfüllt ist, eine andere Parameterkonfiguration ($S_{q+1}$) eingestellt wird und die mindestens eine Gargutbehandlungseinrichtung (6) dann in einem folgenden (p+1)-ten Iterationsschritt mit der anderen Parameterkonfiguration ($S_{q+1}$) betrieben wird.

11. Verfahren (S1-S11) nach einem der vorhergehenden Ansprüche, bei dem

   a) die mindestens eine Gargutbehandlungseinrichtung (6) in einem p-ten Iterationsschritt (p) mit $p \geq 1$ für die vorgegebene Zeitdauer ($\Delta t$) mit einer q-ten Parameterkonfiguration ($S_q$) mit $q \leq p$ betrieben wird, um in dem Garraum (2) befindliches Gargut (G) zu behandeln,
   b) anschließend an den Ablauf der Zeitdauer ($\Delta t$) mittels des mindestens einen Sensors (9) eine p-te Messwertverteilung < $V_p$ > der Oberflächeneigenschaft des Garguts (G) bestimmt wird,
   c) aus einem Vergleich der p-ten Messwertverteilung < $V_p$ > mit einer vor Schritt a) aufgenommenen (p-1)-ten Messwertverteilung < $V_{p-1}$ > ein Veränderungsmuster ($E(S_q)$> berechnet und gespeichert wird,
   d) für alle bisher im Laufe dieses Verfahrens gespeicherten Veränderungsmuster {< $E(S_q)$ >} ein jeweiliger Bewertungswert $B_q$ berechnet wird, der einen Unterschied zwischen einer Abweichung einer Zielverteilung < Z > zu der Messwertverteilung < $V_p$ > und einer Abweichung der Zielverteilung < Z > zu einem Prädiktionsmuster < $V'_p$ > darstellt, wobei das Prädiktionsmuster < $V'_p$ > eine Überlagerung der Messwertverteilung < $V_p$ > mit dem zugehörigen Veränderungsmuster < $E(S_q)$ > darstellt,
   e) diejenige Parameterkonfiguration ($S_q$) eingestellt wird, deren Bewertungswert $B_q$ mindestens ein vorgegebenes Kriterium erfüllt,
   f) für die p-te Messwertverteilung < $V_p$ > der Qualitätswert ($Q_p$) berechnet wird,
   g) falls für den Qualitätswert ($Q_p$) das vorgegebene Qualitätskriterium erfüllt ist, unter Beibehaltung der aktuellen Parameterkonfiguration ($S_q$) iterativ zu Schritt a) verzweigt wird, und
   h) falls für den Qualitätswert ($Q_p$) das vorgegebene Qualitätskriterium nicht erfüllt ist, die andere Parameterkonfiguration ($S_{q+1}$) eingestellt wird und dann iterativ zu Schritt a) verzweigt wird.

12. Verfahren nach Anspruch 11, bei dem

   - die mindestens eine Gargutbehandlungseinrichtung mindestens eine Mikrowelleneinrichtung (6) zum Einbringen von Mikrowellen in den Garraum (G) umfasst, wobei durch mindestens zwei Parameterkonfigurationen ($S_q$) der Mikrowelleneinrichtung (6) unterschiedliche Feldverteilungen der Mikrowellen in dem Garraum (2) erzeugbar sind,

- die Oberflächeneigenschaft eine Oberflächentemperatur des Garguts (G) ist und
- der mindestens eine Sensor (9) mindestens einen in den Garraum (2) gerichteten Infrarotsensor (9), insbesondere Wärmebildkamera, zum Bestimmen von Temperaturverteilungen < V > auf dem Gargut (G) umfasst,

wobei bei dem Verfahren

a) die mindestens Mikrowelleneinrichtung (6) in einem p-ten Iterationsschritt mit $p \geq 1$ für eine vorgegebene Zeitdauer ($\Delta t$) mit einer q-ten Parameterkonfiguration ($S_q$) mit $q \leq p$ betrieben wird, um in dem Garraum (2) befindliches Gargut (G) mit Mikrowellen zu behandeln,

b) anschließend an den Ablauf der Zeitdauer ($\Delta t$) mittels des mindestens einen Infrarotsensors (9) eine p-te Temperaturverteilung < $V_p$ > des Garguts (G) bestimmt wird,

c) aus einem Vergleich der p-ten Temperaturverteilung < $V_p$ > mit einer vor Schritt a) aufgenommenen (p-1)-ten Temperaturverteilung < $V_{p-1}$ > ein Veränderungsmuster < $E(S_q)$ > berechnet und gespeichert wird,

d) für alle bisher im Laufe dieses Verfahrens gespeicherten Veränderungsmuster {< $E(S_q)$ >} ein jeweiliger Bewertungswert $B_q$ berechnet wird, der einen Unterschied zwischen einer Abweichung einer Ziel-Temperaturverteilung < Z > zu der Temperaturverteilung < $V_p$ > und einer Abweichung der Ziel-Temperaturverteilung < Z > zu einem Prädiktionsmuster < $V'_p$ > darstellt, wobei das Prädiktionsmuster < $V'_p$ > eine Überlagerung der Temperaturverteilung < $V_p$ > mit dem zugehörigen Veränderungsmuster < $E(S_q)$ > darstellt,

e) diejenige Parameterkonfiguration ($S_q$) eingestellt wird, deren Bewertungswert $B_q$ mindestens ein vorgegebenes Kriterium erfüllt,

f) für die p-te Messwertverteilung < $V_p$ > der Qualitätswert ($Q_p$) berechnet wird,

g) falls für den Qualitätswert $Q_p$ das vorgegebene Qualitätskriterium erfüllt ist, unter Beibehaltung der aktuellen Parameterkonfiguration ($S_q$) iterativ zu Schritt a) verzweigt wird, und

h) falls für den Qualitätswert $Q_p$ das vorgegebene Qualitätskriterium nicht erfüllt ist, die andere Parameterkonfiguration ($S_{q+1}$) eingestellt wird und dann iterativ zu Schritt a) verzweigt wird.

13. Verfahren nach einem der Ansprüche 11 bis 12, bei dem das Veränderungsmuster ($E(S_q)$> bildpunktweise als Differenz zwischen der p-ten Messwertverteilung <$V_p$> und der (p-1)-ten Verteilung <$V_{p-1}$> berechnet wird, insbesondere gemäß

$$< \mathrm{E}(S_q) > = < V_p > - < V_{p-1} >$$

berechnet wird.

14. Verfahren nach einem der Ansprüche 11 bis 13, bei dem der Bewertungswert $B_q$ gemäß

$$B_q = \sum \left( \left| < Z^* > - < V_p > \right|^d - \left| < Z^* > - < V'_p > \right|^d \right)$$

mit dem Prädiktionsmuster <$V'_p$> = <$V_p$> + <$E(S_q)$> und einem Exponentialfaktor d berechnet wird.

15. Verfahren nach einem der vorhergehenden Ansprüche, bei dem zum Bestimmen der Messwertverteilung <V> des Garguts (G) die Messwertverteilung <V> in einem mittels des mindestens einen Sensors (9) aus dem Garraum (2) aufgenommenen Bilds isoliert wird.

16. Haushalts-Gargerät (1), aufweisend

- einen Garraum (2),
- mindestens eine Gargutbehandlungseinrichtung (6) zum Behandeln von in dem Garraum (2) befindlichem Gargut (G) mit mehreren Parameterkonfigurationen ($S_q$), wobei durch mindestens zwei Parameterkonfigurationen ($S_q$) das Gargut (G) lokal unterschiedlich behandelbar ist,
- mindestens einen in den Garraum (2) gerichteten Sensor (9) zum Bestimmen von Messwertverteilungen <V> einer Oberflächeneigenschaft des Garguts (G) und
- eine Datenverarbeitungseinrichtung (10),

**dadurch gekennzeichnet, dass** die Datenverarbeitungseinrichtung (10) zum Durchführen des Verfahrens (S1-S11) nach einem der vorhergehenden Ansprüche eingerichtet ist.

**Claims**

1. Method (S1-S11) for operating a household cooking appliance (1), having

- a cooking chamber (2),
- at least one food treatment apparatus (6) having multiple parameter configurations ($S_q + S_{q+1}$) for treating food (G) located in the cooking chamber (2), wherein the food (G) can be treated locally differently by means of at least two parameter configurations ($S_q, S_{q+1}$),
- wherein the at least one food treatment apparatus (6) comprises at least one microwave apparatus (6) for introducing microwaves into the cooking chamber (G) and/or at least one radiant heating element for introducing thermal radiation into the cooking chamber (G) and
- at least one sensor (9) directed into the cooking chamber (2) to determine measured-value distributions $< V >$ of a surface property of the food (G),

wherein, in the method,

- the at least one food treatment apparatus (6) is operated for a predetermined time period ($\Delta t$) with one of the parameter configurations ($S_q$) in order to treat food (G) located in the cooking chamber (2),
- following expiration of a time period ($\Delta t$), a measured-value distribution $< V >$ of a surface property of the food (G) is determined by means of the at least one sensor (9),
- a quality value (Q) is determined from the measured-value distribution $< V >$ and,
- if the quality value (Q) does not meet a predetermined quality criterion, the food treatment apparatus (6) is subsequently operated with another of the parameter configurations ($S_{q+1}$),

**characterised in that**

- the quality value (Q) is determined from a difference between two different scalar variables, in the form of different average values ($x_{arith}, x_{med}$), calculated from the same at least one measured-value distribution $< V >$, wherein
- the different average values ($x_{arith}, x_{med}$) originate from the group comprising a modal mean, a median value, an arithmetic mean, a weighted arithmetic mean, a geometric mean, a weighted geometric mean, a harmonic mean, a weighted harmonic mean, a quadratic mean, a cubic mean, a logarithmic mean, a winsorised mean, a quartile mean, a mean of the shortest half, a Gastwirth-Cohen mean, a moving average, a Hölder mean, a Lehner mean, a Stolarsky mean.

2. Method (S1-S11) according to claim 1, wherein the two average values ($x_{arith}, x_{med}$) comprise an arithmetic mean ($x_{arith}$) and a median value ($x_{med}$).

3. Method (S1-S11) according to one of the preceding claims, in which the quality value comprises an amount of the difference of the two average values ($x_{arith}, x_{med}$).

4. Method (S1-S11) according to claim 3, in which the quality criterion comprises reaching or falling below a predetermined quality threshold value.

5. Method (S1-S11) according to one of the preceding claims, wherein the at least one sensor (9) comprises at least one sensor (9) directed into the cooking chamber (2) to determine pixel-type temperature distributions $< V >$ on the food (G), and the average values ($X_{arith}, X_{med}$) are calculated from the individual pixels of the measured-value distribution $< V >$.

6. Method (S1-S11) according to one of the preceding claims, in which the method is terminated if

- the quality value (Q) reaches a predetermined abort criterion and/or
- the measured-value distribution $< V >$ reaches a predetermined target value (Vtarget).

7. Method according to claim 6, in which the food (G) has reached the predetermined target value ($V_{target}$) if $\max (< V_p >) \geq V_{target}$ or $\min (< V_p >) \geq V_{target}$ is met.

8. Method (S1-S11) according to one of the preceding claims, in which different field distributions of the microwaves in the cooking chamber (2) can be generated by means of at least two parameter configurations ($S_q$) of the microwave apparatus (6).

9. Method according to claim 8, in which a parameter configuration ($S_q$) comprises in each case a value of at least one operating parameter ($S_q$) of the microwave apparatus (6) from the group

 - respective angle of rotation of at least one rotatable antenna (7);
 - respective height position of at least one rotatable antenna (7);
 - spatial position of at least one microwave reflector;
 - microwave frequency;
 - relative phases between different microwave generators.

10. Method according to one of the preceding claims, in which the method proceeds iteratively, whereby

 - the at least one food treatment apparatus (6) is operated in a pth iteration step (p) where $p \geq 1$ for the predetermined time period ($\Delta t$) with a qth parameter configuration (Sq) where $q \leq p$ in order to treat food (G) located in the cooking chamber (2),
 - following expiration of the time period ($\Delta t$), a pth measured-value distribution < Vp > of the surface property of the food (G) is determined by means of the at least one sensor (9),
 - for the pth measured-value distribution < Vp >, the quality value (Qp) is calculated, and
 - if for the quality value (Qp) the predetermined quality criterion is met, the at least one food treatment apparatus (6) is operated in a following (p+1)th iteration step with the same qth parameter configuration (Sq), and
 - if for the quality value (Qp) the predetermined quality criterion is not met, another parameter configuration ($S_{q+1}$) is set, and the at least one food treatment apparatus (6) is then operated in a following $(p+1)^{th}$ iteration step with the other parameter configuration ($S_{q+1}$).

11. Method (S1-S11) according to one of the preceding claims, in which

 a) the at least one food treatment apparatus (6) is operated in a $p^{th}$ iteration step (p) where $p \geq 1$ for the predetermined time period ($\Delta t$) with a $q^{th}$ parameter configuration ($S_q$) where $q \leq p$ in order to treat food (G) located in the cooking chamber (2),
 b) following expiration of the time period ($\Delta t$), a $p^{th}$ measured-value distribution < $V_p$ > of the surface property of the food (G) is determined by means of the at least one sensor (9),
 c) from a comparison of the $p^{th}$ measured-value distribution < $V_p$ > with a $(p-1)^{th}$ measured-value distribution < $V_{p-1}$ > recorded before step a) a change pattern is calculated and saved,
 d) for all change patterns {< $E(S_q)$ >} saved previously in the course of this method, an evaluation value $B_q$ is calculated in each case, which represents a difference between a deviation of a target distribution < Z > relative to the measured-value distribution < $V_p$ > and a deviation of the target distribution < Z > relative to a prediction pattern < $V'_p$ >, wherein the prediction pattern < $V'_p$ > represents an overlaying of the measured-value distribution < $V_p$ > with the associated change pattern < $E(S_q)$ >,
 e) the parameter configuration ($S_q$) whose evaluation value $B_q$ meets at least one predetermined criterion is set,
 f) for the $p^{th}$ measured-value distribution < $V_p$ > the quality value ($Q_p$) is calculated,
 g) if for the quality value ($Q_p$) the predetermined quality criterion is met, the method branches iteratively to step a) while retaining the current parameter configuration ($S_q$), and
 h) if for the quality value ($Q_p$) the predetermined quality criterion is not met, the other parameter configuration ($S_{q+1}$) is set, and the method then branches iteratively to step a).

12. Method according to claim 11, in which

 - the at least one food treatment apparatus comprises a microwave apparatus (6) for introducing microwaves into the cooking chamber (G), wherein different field distributions of the microwaves in the cooking chamber (2) can be generated by means of at least two parameter configurations ($S_q$) of the microwave apparatus (6),
 - the surface property is a surface temperature of the food (G) and
 - the at least one sensor (9) comprises at least one infrared sensor (9), in particular thermal imaging camera, directed into the cooking chamber (2) for determining temperature distributions < V > on the food (G),

wherein, in the method,

a) the at least one microwave apparatus (6) is operated in a $p^{th}$ iteration step (p) where $p \geq 1$ for a predetermined time period ($\Delta t$) with a $q^{th}$ parameter configuration ($S_q$) where $q \leq p$, in order to treat food (G) located in the cooking chamber (2) with microwaves,

b) following expiration of the time period ($\Delta t$), a $p^{th}$ measured-value distribution $< V_p >$ of the food (G) is determined by means of the at least one infrared sensor (9),

c) from a comparison of the $p^{th}$ temperature distribution $< V_p >$ with a $(p-1)^{th}$ temperature distribution $< V_{p-1} >$ recorded before step a) a change pattern $< E(S_q) >$ is calculated and saved,

d) for all change patterns $\{< E(S_q) >\}$ saved previously in the course of this method, an evaluation value $B_q$ is calculated in each case, which represents a difference between a deviation of a target temperature distribution $< Z >$ relative to the temperature distribution $< V_p >$ and a deviation of the target temperature distribution $< Z >$ relative to a prediction pattern $< V'_p >$, wherein the prediction pattern $< V'_p >$ represents an overlaying of the temperature distribution $< V_p >$ with the associated change pattern $< E(S_q) >$,

e) the parameter configuration ($S_q$) whose evaluation value $B_q$ meets at least one predetermined criterion is set,

f) for the $p^{th}$ measured-value distribution $< V_p >$, the quality value ($Q_p$) is calculated,

g) if for the quality value ($Q_p$) the predetermined quality criterion is met, the method branches iteratively to step a) while retaining the current parameter configuration ($S_q$), and

h) if for the quality value ($Q_p$) the predetermined quality criterion is not met, the other parameter configuration ($S_{q+1}$) is set and the method then branches iteratively to step a).

13. Method according to one of claims 11 to 12, in which the change pattern $< E(S_q) >$ is calculated pixel-by-pixel as the difference between the $p^{th}$ measured-value distribution $< V_p >$ and the $(p-1)^{th}$ distribution $< V_{p-1} >$, in particular according to

$$< E(S_q) > \; = \; < V_p > - < V_{p-1} >.$$

14. Method according to one of claims 11 to 13, in which the evaluation value $B_q$ is calculated according to

$$B_q = \sum (|< Z^* > - < V_p >|^d - |< Z^* > - < V'_p >|^d)$$

with the prediction pattern $< V'_p > \; = \; < V_p > + < E(S_q) >$ and an exponential factor d.

15. Method according to one of the preceding claims, in which, to determine the measured-value distribution $< V >$ of the food (G), the measured-value distribution $< V >$ is isolated in an image recorded from the cooking chamber (2) by means of the at least one sensor (9).

16. Household cooking appliance (1), having

- a cooking chamber (2),
- at least one food treatment apparatus (6) having multiple parameter configurations ($S_q$) for treating food (G) located in the cooking chamber (2), wherein the food (G) can be treated locally differently by means of at least two parameter configurations ($S_q$),
- at least one sensor (9) directed into the cooking chamber (2) to determine measured-value distributions $< V >$ of a surface property of the food (G) and
- a data processing apparatus (10),

**characterised in that** the data processing apparatus (10) is configured for performing the method (S1-S11) according to one of the preceding claims.

## Revendications

1. Procédé (S1-S11) permettant de faire fonctionner un appareil de cuisson ménager (1), comprenant

- un espace de cuisson (2),
- au moins un dispositif de traitement d'aliment à cuire (6) pour le traitement d'un aliment à cuire (G) se trouvant dans l'espace de cuisson (2) avec plusieurs configurations de paramètres ($S_q$, $S_{q+1}$), dans lequel l'aliment à cuire (G) peut être traité localement de manière différente grâce à au moins deux configurations de paramètres ($S_q$, $S_{q+1}$),
- dans lequel l'au moins un dispositif de traitement d'aliment à cuire (6) comporte au moins un dispositif à micro-ondes (6) pour l'introduction de micro-ondes dans l'espace de cuisson (G) et/ou au moins un corps de chauffe rayonnant pour l'introduction de rayonnement thermique dans l'espace de cuisson (G) et
- au moins un capteur (9) dirigé dans l'espace de cuisson (2) pour la détermination de distributions de valeurs de mesure < V > d'une propriété de surface de l'aliment à cuire (G),

dans lequel, selon le procédé

- l'au moins un dispositif de traitement d'aliment à cuire (6) est mis en fonctionnement pendant une durée ($\Delta t$) prédéfinie avec l'une des configurations de paramètres ($S_q$) afin de traiter un aliment à cuire (G) se trouvant dans l'espace de cuisson (2),
- à la suite de l'expiration d'une durée ($\Delta t$), une distribution de valeurs de mesure < V > d'une propriété de surface de l'aliment à cuire (G) est déterminée au moyen de l'au moins un capteur (9),
- une valeur de qualité (Q) est déterminée à partir de la distribution de valeurs de mesure < V > et,
- dans le cas où la valeur de qualité (Q) ne satisfait pas à un critère de qualité prédéfini, le dispositif de traitement d'aliment à cuire (6) est mis en fonctionnement par la suite avec une autre des configurations de paramètres ($S_{q+1}$),

**caractérisé en ce que**

- la valeur de qualité (Q) est déterminée à partir d'une différence de deux grandeurs scalaires différentes calculées à partir de la même au moins une distribution de valeurs de mesure < V > sous la forme de différentes valeurs moyennes ($X_{arithm}$, $X_{med}$), dans lequel
- les différentes valeurs moyennes ($X_{arithm}$, $X_{med}$) proviennent du groupe comportant une moyenne modale, une valeur médiane, une moyenne arithmétique, une moyenne arithmétique pondérée, une moyenne géométrique, une moyenne géométrique pondérée, une moyenne harmonique, une moyenne harmonique pondérée, une moyenne quadratique, une moyenne cubique, une valeur moyenne logarithmique, une moyenne selon la méthode de Winsor, une moyenne des quartiles, un milieu de la moitié la plus courte, une moyenne de Gastwirth-Cohen, une valeur moyenne glissante, une moyenne de Hölder, une moyenne de Lehner, une moyenne de Stolarsky.

2. Procédé (S1-S11) selon la revendication 1, dans lequel les deux valeurs moyennes ($X_{arithm}$, $X_{med}$) comportent une valeur moyenne arithmétique ($X_{arithm}$) et une valeur médiane ($X_{med}$).

3. Procédé (S1-S11) selon l'une des revendications précédentes, selon lequel la valeur de qualité comporte une quantité de la différence des deux valeurs moyennes ($X_{arithm}$, $X_{med}$).

4. Procédé (S1-S11) selon la revendication 3, selon lequel le critère de qualité comporte le fait d'atteindre ou de descendre au-dessous d'une valeur seuil de qualité prédéfinie.

5. Procédé (S1-S11) selon l'une des revendications précédentes, dans lequel l'au moins un capteur (9) comporte au moins un capteur (9) dirigé dans l'espace de cuisson (2) pour la détermination de distributions de températures < V > pixel par pixel sur l'aliment à cuire (G) et les valeurs moyennes ($X_{arithm}$, $X_{med}$) sont calculées à partir des pixels individuels de la distribution de valeurs de mesure < V >.

6. Procédé (S1-S11) selon l'une des revendications précédentes, selon lequel le procédé est terminé dans le cas où

- la valeur de qualité (Q) atteint un critère d'interruption prédéfini et/ou
- la distribution de valeurs de mesure < V > atteint une valeur cible ($V_{Ziel}$) prédéfinie.

7. Procédé selon la revendication 6, selon lequel l'aliment à cuire (G) a atteint la valeur cible ($V_{Ziel}$) prédéfinie lorsqu'il est satisfait à $\max(< V_p >) \geq V_{Ziel}$ ou $\min(< V_p >) \geq V_{Ziel}$.

8. Procédé (S1-S11) selon l'une des revendications précédentes, selon lequel différentes distributions de champ des micro-ondes peuvent être produites dans l'espace de cuisson (2) grâce à au moins deux configurations de paramètres ($S_q$) du dispositif à micro-ondes (6).

**9.** Procédé selon la revendication 8, selon lequel une configuration de paramètres ($S_q$) comporte respectivement une valeur d'au moins un paramètre de fonctionnement ($S_q$) du dispositif à micro-ondes (6) provenant du groupe

- angle de rotation respectif d'au moins une antenne rotative (7) ;
- position en hauteur respective d'au moins une antenne rotative (7) ;
- position spatiale d'au moins un réflecteur à micro-ondes ;
- fréquence de micro-ondes ;
- phases relatives entre des productions de micro-ondes différentes.

**10.** Procédé selon l'une des revendications précédentes, selon lequel le procédé se déroule de manière itérative, par le fait que

- l'au moins un dispositif de traitement d'aliment à cuire (6) est mis en fonctionnement dans une $p^{ième}$ étape d'itération (p) avec $p \geq 1$ pendant la durée ($\Delta t$) prédéfinie avec une $q^{ième}$ configuration de paramètres ($S_q$) avec $q \leq p$ afin de traiter un aliment à cuire (G) se trouvant dans l'espace de cuisson (2),
- à la suite de l'expiration de la durée ($\Delta t$), une $p^{ième}$ distribution de valeurs de mesure < $V_p$ > de la propriété de surface de l'aliment à cuire (G) est déterminée au moyen de l'au moins un capteur (9),
- la valeur de qualité ($Q_p$) est calculée pour la $p^{ième}$ distribution de valeurs de mesure < $V_p$ >, et
- dans le cas où il est satisfait au critère de qualité prédéfini pour la valeur de qualité ($Q_p$), l'au moins un dispositif de traitement d'aliment à cuire (6) est mis en fonctionnement dans une $(p + 1)^{ième}$ étape d'itération suivante avec la même $q^{ième}$ configuration de paramètres ($S_q$), et
- dans le cas où il n'est pas satisfait au critère de qualité prédéfini pour la valeur de qualité ($Q_p$), une autre configuration de paramètres ($S_{q + 1}$) est ajustée et l'au moins un dispositif de traitement d'aliment à cuire (6) est ensuite mis en fonctionnement dans une $(p + 1)^{ième}$ étape d'itération suivante avec l'autre configuration de paramètres ($S_{q + 1}$).

**11.** Procédé (S1-S11) selon l'une des revendications précédentes, selon lequel

a) l'au moins un dispositif de traitement d'aliment à cuire (6) est mis en fonctionnement dans une $p^{ième}$ étape d'itération (p) avec $p \geq 1$ pendant la durée ($\Delta t$) prédéfinie avec une $q^{ième}$ configuration de paramètres ($S_q$) avec $q \leq p$ afin de traiter un aliment à cuire (G) se trouvant dans l'espace de cuisson (2),
b) à la suite de l'expiration de la durée ($\Delta t$), une $p^{ième}$ distribution de valeurs de mesure < $V_p$ > de la propriété de surface de l'aliment à cuire (G) est déterminée au moyen de l'au moins un capteur (9),
c) un modèle de variation < $E(S_q)$ > est calculé à partir d'une comparaison de la $p^{ième}$ distribution de valeurs de mesure < $V_p$ > avec une $(p - 1)^{ième}$ distribution de valeurs de mesure < $V_{p-1}$ > enregistrée avant l'étape a) et mémorisé,
d) pour tous les modèles de variation {< $E(S_q)$ >} mémorisés jusqu'à présent au cours de ce procédé, une valeur d'évaluation $B_q$ respective est calculée, laquelle représente une divergence entre un écart d'une distribution cible < Z > par rapport à la distribution de valeurs de mesure < $V_p$ > et un écart de la distribution cible < Z > par rapport à un modèle de prédiction < $V'_p$ >, dans lequel le modèle de prédiction < $V'_p$ > représente un chevauchement de la distribution de valeurs de mesure < $V_p$ > avec le modèle de variation < $E(S_q)$ > associé,
e) la configuration de paramètres ($S_q$) dont la valeur d'évaluation $B_q$ satisfait à au moins un critère prédéfini est ajustée,
f) la valeur de qualité ($Q_p$) est calculée pour la $p^{ième}$ distribution de valeurs de mesure < $V_p$ >,
g) dans le cas où il est satisfait au critère de qualité prédéfini pour la valeur de qualité ($Q_p$), un passage à l'étape a) est effectué de manière itérative avec conservation de la configuration de paramètres ($S_q$) actuelle, et
h) dans le cas où il n'est pas satisfait au critère de qualité prédéfini pour la valeur de qualité ($Q_p$), l'autre configuration de paramètres ($S_{q + 1}$) est ajustée et un passage à l'étape a) est ensuite effectué de manière itérative.

**12.** Procédé selon la revendication 11, selon lequel

- l'au moins un dispositif de traitement d'aliment à cuire comporte au moins un dispositif à micro-ondes (6) pour l'introduction de micro-ondes dans l'espace de cuisson (G), dans lequel différentes distributions de champ des micro-ondes peuvent être produites dans l'espace de cuisson (2) grâce à au moins deux configurations de paramètres ($S_q$) du dispositif à micro-ondes (6),
- la propriété de surface est une température de surface de l'aliment à cuire (G) et
- l'au moins un capteur (9) comporte au moins un capteur infrarouge (9), en particulier une caméra vidéo thermique, dirigé dans l'espace de cuisson (2), pour la détermination de distributions de températures < V > sur l'aliment à cuire (G),

dans lequel, selon le procédé

a) l'au moins un dispositif à micro-ondes (6) est mis en fonctionnement dans une $p^{ième}$ étape d'itération avec $p \geq 1$ pendant une durée ($\Delta t$) prédéfinie avec une $q^{ième}$ configuration de paramètres ($S_q$) avec $q \leq p$ afin de traiter un aliment à cuire (G) se trouvant dans l'espace de cuisson (2) avec des micro-ondes,

b) à la suite de l'expiration de la durée ($\Delta t$), une $p^{ième}$ distribution de températures < $V_p$ > de l'aliment à cuire (G) est déterminée au moyen de l'au moins un capteur infrarouge (9),

c) un modèle de variation < $E(S_q)$ > est calculé à partir d'une comparaison de la $p^{ième}$ distribution de températures < $V_p$ > avec une $(p - 1)^{ième}$ distribution de températures < $V_{p-1}$ > enregistrée avant l'étape a) et mémorisé,

d) pour tous les modèles de variation {< $E(S_q)$ >} mémorisés jusqu'à présent au cours de ce procédé, une valeur d'évaluation $B_q$ respective est calculée, laquelle représente une divergence entre un écart d'une distribution de températures cible < Z > par rapport à la distribution de températures < $V_p$ > et un écart de la distribution de températures cible < Z > par rapport à un modèle de prédiction < $V'_p$ >, dans lequel le modèle de prédiction < $V'_p$ > représente un chevauchement de la distribution de températures < $V_p$ > avec le modèle de variation < $E(S_q)$ > associé,

e) la configuration de paramètres ($S_q$) dont la valeur d'évaluation $B_q$ satisfait à au moins un critère prédéfini est ajustée,

f) la valeur de qualité ($Q_p$) est calculée pour la $p^{ième}$ distribution de valeurs de mesure < $V_p$ >,

g) dans le cas où il est satisfait au critère de qualité prédéfini pour la valeur de qualité $Q_p$, un passage à l'étape a) est effectué de manière itérative avec conservation de la configuration de paramètres ($S_q$) actuelle, et

h) dans le cas où il n'est pas satisfait au critère de qualité prédéfini pour la valeur de qualité $Q_p$, l'autre configuration de paramètres ($S_{q+1}$) est ajustée et un passage à l'étape a) est ensuite effectué de manière itérative.

13. Procédé selon l'une des revendications 11 à 12, selon lequel le modèle de variation < $E(S_q)$ > est calculé pixel par pixel en tant que différence entre la $p^{ième}$ distribution de valeurs de mesure < $V_p$ > et la $(p - 1)^{ième}$ distribution < $V_{p-1}$ >, en particulier selon

$$< E(S_q) > = < V_p > - < V_{p-1} >.$$

14. Procédé selon l'une des revendications 11 à 13, selon lequel la valeur d'évaluation $B_q$ est calculée selon

$$B_q = \sum \left( \left| < Z^* > - < V_p > \right|^d - \left| < Z^* > - < V'_p > \right|^d \right)$$

avec le modèle de prédiction < $V'_p$ > = < $V_p$ > + < $E(S_q)$ > et un facteur exponentiel d.

15. Procédé selon l'une des revendications précédentes, selon lequel, pour la détermination de la distribution de valeurs de mesure < V > de l'aliment à cuire (G), la distribution de valeurs de mesure < V > est isolée dans une image enregistrée à partir de l'espace de cuisson (2) au moyen de l'au moins un capteur (9).

16. Appareil de cuisson ménager (1), comprenant

- un espace de cuisson (2),
- au moins un dispositif de traitement d'aliment à cuire (6) pour le traitement d'un aliment à cuire (G) se trouvant dans l'espace de cuisson (2) avec plusieurs configurations de paramètres ($S_q$), dans lequel l'aliment à cuire (G) peut être traité localement de manière différente grâce à au moins deux configurations de paramètres ($S_q$),
- au moins un capteur (9) dirigé dans l'espace de cuisson (2) pour la détermination de distributions de valeurs de mesure < V > d'une propriété de surface de l'aliment à cuire (G) et
- un dispositif de traitement de données (10),

**caractérisé en ce que** le dispositif de traitement de données (10) est conçu pour la mise en oeuvre du procédé (S1-S11) selon l'une des revendications précédentes.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180098381 A1
- US 20170290095 A1
- WO 2012109634 A1
- CN 107908144 A
- DE 102007048834 A1
- EP 1921384 A1